(19) Europäisches Patentamt
European Patent Office
Office européen des brevets

(11) **EP 3 008 107 B1**

(12) **EUROPÄISCHE PATENTSCHRIFT**

(45) Veröffentlichungstag und Bekanntmachung des Hinweises auf die Patenterteilung:
**30.05.2018 Patentblatt 2018/22**

(21) Anmeldenummer: **14729007.6**

(22) Anmeldetag: **11.06.2014**

(51) Int Cl.:
***C08G 69/28*** *(2006.01)*

(86) Internationale Anmeldenummer:
**PCT/EP2014/062101**

(87) Internationale Veröffentlichungsnummer:
**WO 2014/198755 (18.12.2014 Gazette 2014/51)**

(54) **VERFAHREN ZUR KONTINUIERLICHEN HERSTELLUNG EINES ALIPHATISCHEN ODER TEILAROMATISCHEN POLYAMID-OLIGOMERS**

METHOD FOR THE CONTINUOUS MANUFACTURE OF AN ALIPHATIC OR PARTIALLY AROMATIC POLYAMIDE OLIGOMER

PROCÉDÉ DE FABRICATION EN CONTINU D'UN OLIGOMÈRE DE POLYAMIDE ALIPHATIQUE OU PARTIELLEMENT AROMATIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **12.06.2013 EP 13171648**

(43) Veröffentlichungstag der Anmeldung:
**20.04.2016 Patentblatt 2016/16**

(73) Patentinhaber: **BASF SE**
**67056 Ludwigshafen am Rhein (DE)**

(72) Erfinder:
• **KORY, Gad**
**69251 Gaiberg (DE)**
• **CLAUSS, Joachim**
**64297 Darmstadt (DE)**
• **WILMS, Axel**
**67227 Frankenthal (DE)**
• **SCHWIEGK, Stefan**
**67433 Neustadt (DE)**
• **SCHMIDT, Christian**
**67061 Ludwigshafen (DE)**
• **BIEDASEK, Silke**
**67061 Ludwigshafen (DE)**
• **SACK, Heinrich**
**67454 Haßloch (DE)**
• **RICHTER, Florian**
**68159 Mannheim (DE)**
• **ZHU, Ning**
**68163 Mannheim (DE)**

(74) Vertreter: **BASF IP Association**
**BASF SE**
**G-FLP-C006**
**67056 Ludwigshafen (DE)**

(56) Entgegenhaltungen:
**EP-A1- 0 693 515**

**Beschreibung**

HINTERGRUND DER ERFINDUNG

Die vorliegende Erfindung betrifft ein Verfahren zur Herstellung eines aliphatischen oder teilaromatischen Polyamid-Oligomers, bei dem man eine wässrige Zusammensetzung der Monomeren einer Oligomerisierung bei erhöhter Temperatur und erhöhtem Druck unterzieht und den Oligomerisierungsaustrag vorzugsweise einer Entspannung unterzieht.

STAND DER TECHNIK

Polyamide gehören zu den weltweit in großem Umfang hergestellten Polymeren und dienen neben den Hauptanwendungsbereichen Folien, Fasern und Werkstoffen einer Vielzahl weiterer Verwendungszwecke. Unter den Polyamiden sind das Polyamid 6 (Polycaprolactam) und das Polyamid 66 (Nylon, Polyhexamethylenadipinsäureamid) die am meisten hergestellten Polymere. Die Herstellung von Polyamid 66 erfolgt überwiegend durch Polykondensation sogenannter AH-Salzlösungen, d. h. von wässrigen Lösungen, die Adipinsäure und 1,6-Diaminohexan (Hexamethylendiamin) in stöchiometrischen Mengen enthalten. Das klassische Verfahren zur Herstellung von Polyamid 6 ist die hydrolytische ringöffnende Polymerisation von $\varepsilon$-Caprolactam, die immer noch von sehr großer technischer Bedeutung ist. Konventionelle Herstellverfahren für Polyamid 6 und Polyamid 66 sind z. B. in Kunststoffhandbuch, ¾ Technische Thermoplaste: Polyamide, Carl Hanser Verlag, 1998, München, S. 42-71, beschrieben.

Eine weitere wichtige Gruppe der Polyamide sind teilkristalline oder amorphe, thermoplastische, teilaromatische Polyamide, die als wichtige technische Kunststoffe breite Verwendung gefunden haben. Sie zeichnen sich insbesondere durch ihre hohe Temperaturbeständigkeit aus und werden auch als Hochtemperatur-Polyamide (HTPA) bezeichnet. Ein wichtiger Einsatzbereich der HTPA ist die Herstellung von Elektro- und Elektronikbauteilen, wobei insbesondere Polymere auf Basis von Polyphthalamid (PPA) sich für den Einsatz in Lötprozessen unter bleifreien Bedingungen (lead free soldering) eignen. HTPA dienen dabei unter Anderem zur Herstellung von Steckverbindern, Mikroschaltern und -tastern und Halbleiterbauteilen, wie Reflektorgehäusen von Leuchtdioden (LED). Ein weiterer wichtiger Einsatzbereich der HTPA sind Automobil-Anwendungen im Hochtemperaturbereich. Hier kommt es vor allem auf eine gute Wärmealterungsbeständigkeit, hohe Festigkeit und Zähigkeit und Schweißnahtfestigkeit der eingesetzten Polymere an. Amorphe HTPA oder solche mit sehr geringen kristallinen Anteilen sind transparent und eignen sich speziell für Anwendungen, bei denen Durchsichtigkeit vorteilhaft ist. Teilkristalline HTPA zeichnen sich im Allgemeinen durch eine dauerhafte Beständigkeit bei hoher Umgebungstemperatur aus und eignen sich z. B. für Anwendungen im Motorraumbereich.

Die Herstellung von teilaromatischen Polyamiden beginnt in der Regel mit der Bildung einer wässrigen Salzlösung aus wenigstens einem Diamin und wenigstens einer Dicarbonsäure sowie optional weiterer Monomerkomponenten, wie Lactamen, $\omega$-Aminosäuren, Monoaminen, Monocarbonsäuren, etc. Auch zur Herstellung von aliphatischen Polyamiden kann man von einer wässrigen Salzlösung ausgehen. An die Bildung der Salzlösung schließt sich dann eine Oligomerisierung durch Polykondensation in der flüssigen wässrigen Phase an. Zum weiteren Molekulargewichtsaufbau stehen dann prinzipiell zwei alternative Routen zur Verfügung. In der ersten Variante wird das gebildete Oligomer durch Entwässerung in die feste Phase überführt und einer sogenannten Festphasenpolymerisation (solid state polymerization, SSP) unterzogen. In der zweiten Variante erfolgt unter kontrollierter Wasserabtrennung und Temperaturerhöhung eine Überführung der wässrigen Lösung in die Schmelze zur weiteren Polykondensation.

Die bekannten Verfahren zur Herstellung von aliphatischen oder teilaromatischen Polyamiden sind speziell hinsichtlich der frühen Phase der Polymerisation, d. h. der Oligomerenbildung, noch verbesserungswürdig.

Die EP 0 693 515 A1 beschreibt ein Verfahren zur Herstellung von Vorkondensaten teilkristalliner oder amorpher, thermoplastisch verarbeitbarer teilaromatischer Polyamide in einem mehrstufigen Chargenprozess, der die folgenden Stufen a) bis e) umfasst:

a) eine Salzbildungsphase zur Herstellung von Salz(en) aus Diamin(en) und Dicarbonsäure(n) und gegebenenfalls partielle Vorreaktion zu niedermolekularen Oligoamiden bei Temperaturen zwischen 120 °C und 220 °C und Drücken von bis zu 23 bar,

b) gegebenenfalls die Überführung der Lösung aus Stufe a) in ein zweites Reaktionsgefäß bzw. einen Rührautoklaven unter den am Ende ihrer Herstellung herrschenden Bedingungen,

c) die Reaktionsphase, während der die Umsetzung zu den Vorkondensaten vorangetrieben wird, durch Aufheizen des Reaktorinhaltes auf eine vorgegebene Temperatur und kontrolliertes Einstellen des Wasserdampfpartialdruckes auf einen vorgegebenen Wert, der durch kontrolliertes Ablassen von Wasserdampf oder gegebenenfalls kontrollierte Einspeisung von Wasserdampf aus einem mit dem Autoklaven verbundenen Wasserdampferzeuger aufrechterhalten wird,

d) eine für mindestens 10 Minuten aufrechtzuerhaltende stationäre Phase, bei der die Temperatur des Reaktorinhalts und der Wasserdampfpartialdruck jeweils auf die Werte eingestellt werden, welche für die Überführung der Vorkondensate in die nachfolgende Prozess-Stufe vorgesehen sind,
wobei im Falle von Vorkondensaten teilkristalliner (Co-)Polyamide mit einem Schmelzpunkt von mehr als 280 °C die Temperatur des Reaktorinhalts während der Phasen c) und d) 265 °C nicht überschreiten darf und für die besagten teilkristallinen (Co-)Polyamide während der Phasen c) und d) bestimmte genauer definierte Randbedingungen in Bezug auf die Abhängigkeit des mindestens anzuwendenden Wasserdampfpartialdruckes $P_{H2O}$ (Minimum) von der Temperatur des Reaktorinhalts und der Amidgruppenkonzentration des Polymeren einzuhalten sind, und

e) eine Austragsphase, während der die Vorkondensate entweder direkt im schmelzflüssigen Zustand oder nach Durchlaufen des festen Zustandes und gegebenenfalls weiterer Verfahrensstufen einer Endreaktionsvorrichtung zugeführt werden können.

Charakteristisch für das Verfahren der EP 0 693 515 A1 ist, dass während der gesamten Reaktionsphase zur Bildung der Vorkondensate ein Stoffaustausch mit der Umgebung erforderlich ist, um den Wasserdampfpartialdruck auf dem vorgegebenen Wert zu halten. Zur Einhaltung des Wasserdampfpartialdrucks in der Reaktionsphase und der stationären Phase ist es erforderlich, zu Beginn der Reaktion das bei der Polykondensation gebildete Wasser als Wasserdampf aus dem Reaktionsgefäß zu entfernen. Dies führt zwangsläufig zu einem Verlust an noch nicht umgesetzten Monomeren, die mit dem Wasserdampf ausgetragen werden. Werden die genannten Parameter nicht exakt eingehalten läuft man Gefahr, dass das Reaktionssystem so stark an Wasser verarmt, dass die gebildeten Polyamide nicht mehr in der flüssigen Phase gelöst sind und sich spontan verfestigen. Das erhaltene Reaktionsprodukt ist so stark an Wasser verarmt, dass eine Überführung in die Schmelze und eine Nachkondensation in der Schmelze nicht möglich ist. Eine kontinuierliche Überführung des Vorkondensates in eine Schmelze-Nachkondensation ist somit nicht möglich. Die EP 0 693 515 A1 lehrt daher die Vorkondensate zu versprühen, wobei das Restwasser schlagartig verdampft und ein festes Vorprodukt erhalten wird. Zum Erhalt des angestrebten hohen Molekulargewichts kann das Präpolymer einer Nachkondensation unterzogen werden. Zu dieser Nachkondensation enthält die EP 0 693 515 A1 jedoch keine konkreten Angaben.

Es wurde überraschenderweise gefunden, dass die zuvor beschriebenen Nachteile des in der EP 0 693 515 A1 gelehrten Verfahrens vermieden werden können, wenn die Herstellung der Polyamidoligomeren zunächst einphasig und vorzugsweise ohne Stoffaustausch mit der Umgebung, d.h. ohne Abtrennung von Wasser, durchgeführt wird. Am Ende der Oligomerisierungszone kann nach dem erfindungsgemäßen Verfahren ein flüssiger Austrag erfolgen und eine Zwischenisolierung eines Feststoffs, wie er beim Sprühaustrag erhalten wird, ist nicht erforderlich. Vorteilhafterweise lässt sich der flüssige Austrag aus dem erfindungsgemäßen Verfahren nach Entspannung einer schnellen Erhitzung auf eine Temperatur oberhalb der Schmelztemperatur und einem weiteren Molekulargewichtsaufbau in der Schmelze unterziehen.
Somit kann ein Verlust von Monomeren insbesondere in der Präpolymerisation wirkungsvoll vermieden und ein hoher Umsatz und ausreichendes Molekulargewicht erreicht werden.

Bei dem in der EP 0 693 515 A1 beschriebenen Verfahren handelt es sich um ein batch-Verfahren, welches mit einer Equilibrierung abgeschlossen werden muss. Zudem ist es in der Austragsphase erforderlich durch Zuführen von Wasserdampf den Druck konstant zu halten. Wie bei jedem Batch-Verfahren besteht dennoch die Gefahr, dass es sowohl innerhalb einer Charge als auch zwischen Chargen zu einer Variation von Eigenschaften kommen kann. Überraschenderweise wurde nun gefunden, dass es mit dem erfindungsgemäßen kontinuierlichen Verfahren möglich ist, auch ohne eine Equilibrierungsphase der Oligomere ein engverteiltes Polymer mit hohem Molekulargewicht zu erhalten.

Die DE 41 42 978 beschreibt ein Mehrschicht-Verbundsystem für Mehrweg-Verpackungen aus mindestens einer Copolyamid-Schutzschicht und mindestens einer Copolyamid-Barriereschicht, wobei die Herstellung der eingesetzten Copolyamide diskontinuierlich erfolgt. Nach den Ausführungsbeispielen erfolgt die Herstellung der Copolyamide nach einer batch-Fahrweise in der Schmelze in einem einfachen Druckautoklaven.

Die WO 2004/055084 beschreibt teilkristalline, thermoplastisch verarbeitbare, teilaromatische Copolyamide, herstellbar durch Kondensation von mindestens den folgenden Monomeren bzw. dessen Vorkondensaten: a) Terephthalsäure b) wenigstens einer dimerisierten Fettsäure mit bis zu 44 Kohlenstoffatomen und c) wenigstens eines aliphatischen Diamins der Formel $H_2N-(CH_2)_X-NH_2$, worin x eine ganze Zahl von 4-18 bedeutet. Zur Herstellung der Copolyamide wird lediglich pauschal auf bekannte Verfahren verwiesen.

Die WO 02/28941 beschreibt ein kontinuierliches Verfahren zur hydrolytischen Polymerisation von Polyamiden, umfassend:

a) Polymerisation einer wässrigen Salzlösung aus Disäuren und Diaminen unter Temperatur- und Druckbedingungen, die geeignet sind, ein mehrphasiges Reaktionsgemisch zu bilden, wobei die Reaktionszeit jedoch so gewählt wird, dass eine Phasentrennung vermieden wird,

b) Wärmeeintrag in das Reaktionsgemisch bei gleichzeitiger Druckverringerung, um Wasser zu entfernen, ohne dass es zu einer Feststoffbildung kommt,

c) weitere Polymerisation des entwässerten Reaktionsgemischs bis zum angestrebten Molekulargewicht.

Insbesondere in den frühen Stufen der Wasserentfernung und des Molekulargewichtaufbaus ist eine gute Durchmischung des Reaktionsgemischs erforderlich. Bezüglich der eingesetzten Vorrichtung wird auf die US 4,019,866 Bezug genommen. Das in der WO 02/28941 beschriebene Verfahren beruht darauf, die frühen Stufen des Molekulargewichtaufbaus unter Bedingungen durchzuführen, bei denen im thermodynamischen Gleichgewicht eine zweite flüssige Phase gebildet würde oder das Polymer ausfallen würde. Die Reaktionsbedingungen werden jedoch so gewählt, dass eine Phasentrennung nur stark verzögert auftritt und während der Verweilzeit des Reaktionsgemischs in der Reaktionszone nicht erfolgt. Zur Entfernung des restlichen Wassers und zur Druckverminderung wird das Reaktionsgemisch aus der Präpolymerisation in eine Entspannungsvorrichtung überführt. Diese ist so ausgestaltet, dass eine schnelle Verfestigung des Reaktionsgemischs infolge der Wasserentfernung vermieden wird. Dazu weist die Vorrichtung zu Beginn der Entspannung einen großen Durchmesser auf, der sich zunehmend verringert, wodurch eine gute Kontrolle der Druckverminderung ermöglicht wird. Das Reaktionsgemisch wird kontinuierlich in einen Rührkessel ausgetragen, aus dem Wasserdampf über Kopf entfernt wird. Das erhaltene flüssige Polymer wird einer weiteren Polymerisation bis zum angestrebten Molekulargewicht ($M_n$ von ca. 13000 bis 20000) unterzogen.

Die US 4,019,866 beschreibt ein Verfahren und eine Vorrichtung zur kontinuierlichen Polyamidherstellung. Nach dem Verfahren werden die Polyamid bildenden Reaktanden kontinuierlich in eine Reaktionszone eingepumpt, die so ausgelegt ist, dass ein rasches Erhitzen und gleichmäßiges Durchmischen ermöglicht sind. Die Reaktanden werden erhitzt und innerhalb der Reaktionszone für eine vorher bestimmte Haltezeit bei einer erhöhten Temperatur und einem erhöhten Druck gleichmäßig vermischt und so ein Dampf und ein Präpolymer gebildet. Der gebildete Dampf wird kontinuierlich von den Präpolymeren abgetrennt und die Präpolymere aus der Reaktionszone abgezogen. Die eingesetzte Vorrichtung ist kolonnenartig ausgestaltet und umfasst eine Rektifizierzone, eine erste und eine zweite Reaktionszone. In der ersten Reaktionszone wird eine Polyamid-bildende Salzlösung teilweise verdampft und teilweise umgesetzt und in der zweiten Reaktionszone die Reaktion bei einem niedrigeren Druck als in der ersten Reaktionszone fortgeführt. Der Dampf aus der ersten Reaktionszone wird durch die Rektifizierzone abgelassen.

Die EP 0123377 A2 beschreibt ein Kondensationsverfahren, das unter Anderem zur Herstellung von Polyamiden dient. Danach wird eine Salzlösung oder ein Präpolymer in einem Verdampfungsreaktor bei einem relativen Druck (Überdruck) von 0 bis 27,6 bar entspannt, Die Verweilzeit im Verdampfungsreaktor beträgt 0,1 bis 20 Sekunden. In einer speziellen Ausführung erfolgt zunächst eine Präpolymerisation bei einer Temperatur von 191 bis 232 °C und einem Lösungsmittelgehalt (Wassergehalt) von weniger als 25 Gew.-%: Die resultierende Salzlösung wird dann auf einen relativen Druck von 103,4 bis 206,8 bar gebracht, erst dann wird die Temperatur auf einen Wert oberhalb der Schmelztemperatur erhöht und die Lösung entspannt. Die Verweilzeit im Entspannungsreaktor beträgt weniger als 1 Minute. Das Polymer kann in einen Doppelschneckenextruder eingespeist und dort einer Polymerisation bei einer Verweilzeit von etwa 45 Sekunden bis 7 Minuten unterzogen werden.

Die DE 4329676 A1 beschreibt ein Verfahren zur kontinuierlichen Polykondensation von hochmolekularen, insbesondere amorphen, teilaromatischen Copolyamiden, wobei zunächst aus einer wässrigen Reaktionsmischung unter Erwärmen und bei mindestens 15 bar Druck ein Vorkondensat hergestellt wird, nachfolgend unter Erhöhung von Temperatur und Druck ein Präpolymer und schließlich durch Kondensation in einem Entgasungsextruder das Copolyamid hergestellt wird. Dabei wird bereits in der Vorkondensationsstufe der Wassergehalt verringert und beträgt am Ende der Vorkondensation etwa 5 bis 40 Gew.-%. Die Herstellung des Präpolymers erfolgt dann bei 220 bis 350 °C und einem Druck von mindestens 20 bar. Die Nachpolymerisation wird dann in einem Doppelschneckenextruder mit Entgasungszonen durchgeführt.

Die EP 0976774 A2 beschreibt ein Verfahren zur Herstellung von Polyamiden, umfassend die folgenden Schritte:

i) Polykondensation einer Dicarbonsäurekomponente, die Terephthalsäure enthält, und einer Diaminkomponente mit einem Gehalt an 1,9-Nonandiamin und/oder 2-Methyl-1,8-octandiamin von 60 bis 100 Mol% in Gegenwart 15 bis 35 Gew.-% Wasser bei einer Reaktionstemperatur von 250 bis 280 °C und einem Reaktionsdruck, der folgende Gleichung erfüllt:

$$P_0 \geq P \geq 0{,}7\ P_0$$

wobei $P_0$ für den Sättigungsdampfdruck von Wasser bei der Reaktionstemperatur steht,
unter Erhalt eines primären Polykondensats,

(ii) Austragen des primären Polykondensats aus Schritt i) in einer atmosphärischen Umgebung mit demselben Temperaturbereich und bei demselben Wassergehalt wie in Schritt i),

(iii) Molekulargewichtsaufbau, indem man den Austrag aus Schritt ii) einer Festphasenpolymerisation oder einer Schmelzepolymerisation unterzieht.

Der vorliegenden Erfindung liegt die Aufgabe zu Grunde, ein verbessertes Verfahren zur Herstellung von Polyamid-Oligomeren zur Verfügung zu stellen. Dabei soll der Verlust an leicht flüchtigen Edukten, wie z. B. von Hexamethylendiamin, vermindert bzw. vermieden werden. Die so erhaltenen Polyamid-Oligomere sollen sich durch vorteilhafte Produkteigenschaften, insbesondere eine nicht zu breite Molekulargewichtsverteilung und/oder einen geringen Gelanteil auszeichnen. Zudem sollen auch die typischen Nachteile eines Batch-Verfahrens, wie Limitierung der Ansatzgröße, Zeitverlust durch Befüllung, Entleerung und Reinigung des Reaktionsbehälters, etc. vermieden werden.

Überraschenderweise wurde gefunden, dass diese Aufgabe gelöst wird, wenn die frühe Phase der Oligomerenbildung ohne Stoffaustausch mit der Umgebung erfolgt, d. h. insbesondere ohne die sofortige Entfernung von Wasser erfolgt. Dabei hat es sich als eine vorteilhafte Ausführung des Verfahrens erwiesen, wenn die zur Oligomerisierung eingesetzte Oligomerisierungszone nicht rückvermischt ist und/oder die Oligomerisierung einphasig in der flüssigen Phase erfolgt. Es hat sich weiterhin als vorteilhafte Ausführung erwiesen, den Austrag aus der Oligomerisierungszone anschließend einer Entspannung unter Erhalt einer wasserhaltigen Gasphase und einer die Polyamid-Oligomeren enthaltenden flüssigen Phase zu unterziehen.

ZUSAMMENFASSUNG DER ERFINDUNG

Ein erster Gegenstand der Erfindung ist ein Verfahren zur kontinuierlichen Herstellung aliphatischer oder teilaromatischer Polyamid-Oligomere, bei dem man

a) eine wässrige Zusammensetzung bereitstellt, die wenigstens eine zur Polyamidbildung geeignete Komponente enthält, die ausgewählt ist unter Dicarbonsäuren, Diaminen, Salzen aus wenigstens einer Dicarbonsäure und wenigstens einem Diamin, Lactamen, ω-Aminosäuren, Aminocarbonsäurenitrilen und Mischungen davon, und die bereitgestellte Zusammensetzung einer Oligomerisierungszone zuführt,

b) die in Schritt a) zugeführte Zusammensetzung einer Oligomerisierung in der Oligomerisierungszone ohne Stoffaustausch mit der Umgebung bei einer Temperatur von 170 bis 290 °C und einem absoluten Druck von wenigstens 20 bar unterzieht.

In einer speziellen Ausführungsform ist die zur Oligomerisierung in Schritt b) eingesetzte Oligomerisierungszone nicht rückvermischt.

In einer weiteren speziellen Ausführungsform erfolgt die Oligomerisierung in Schritt b) einphasig in der flüssigen Phase.

In einer ersten Variante für einen Folgeschritt d) wird der in Schritt c) entnommene Austrag aus der Oligomerisierungszone einer Weiterverarbeitung unterzogen, ohne vorher eine flüssige die Oligomeren enthaltende Phase mit verringertem Wassergehalt zu isolieren.

In einer zweiten Variante für einen Folgeschritt d) wird der in Schritt c) entnommene Austrag aus der Oligomerisierungszone in eine Entspannungszone eingespeist und einer Entspannung unter Erhalt einer wasserhaltigen Gasphase und einer die Oligomeren enthaltenden flüssigen Phase unterzogen und wenigstens ein Teil der wasserhaltigen Gasphase abgetrennt. Speziell wird dabei keine Polyamid-Oligomere enthaltende feste Phase erhalten. In einer speziellen Ausführung dieser zweiten Variante wird die die Polyamid-Oligomeren enthaltende Flüssigphase einer Nachpolymerisation in der Entspannungszone unterzogen (= Schritt e).

Ein weiterer Gegenstand der Offenbarung sind Polyamid-Oligomere, die durch ein Verfahren, wie zuvor und im Folgenden definiert erhältlich sind.

Ein weiterer Gegenstand der Erfindung ist ein Verfahren zur Herstellung eines Polyamids, bei dem man ein Polyamid-Oligomer, das durch ein Verfahren, wie zuvor und im Folgenden definiert erhältlich ist, einer weiteren Polymerisation unterzieht. Gegenstand der Erfindung sind auch die so erhältlichen Polyamide.

Ein weiterer Gegenstand der Offenbarung ist die Verwendung eines teilaromatischen Polyamids, das durch ein Verfahren, wie zuvor und im Folgenden definiert erhältlich ist, vorzugsweise zur Herstellung von Elektro- und Elektronikbauteilen und für Automobil-Anwendungen im Hochtemperaturbereich.

Ein weiterer Gegenstand der Offenbarung ist die Verwendung eines aliphatischen Polyamids, das durch ein Verfahren, wie zuvor und im Folgenden definiert erhältlich ist zur Herstellung von Folien, Monofilamenten, Fasern, Garnen oder textilen Flächengebilden.

KURZE BESCHREIBUNG DER FIGUREN

Figur 1 zeigt eine einfache Vorrichtung zur Durchführung des erfindungsgemäßen Verfahrens, umfassend

- einen Ansatzbehälter zur Bereitstellung der wässrigen Zusammensetzung, die wenigstens eine zur Polyamidbildung geeignete Komponente enthält,

- einen Rohrreaktor als Oligomerisierungszone, und

- einen Abzug aus der Oligomerisierungszone mit einer Vorrichtung zur Druckminderung.

Figur 2 zeigt eine bevorzugte Ausführungsform einer Vorrichtung zur Durchführung des erfindungsgemäßen Verfahrens, umfassend

- einen Ansatzbehälter zur Bereitstellung der wässrigen Zusammensetzung, die wenigstens eine zur Polyamidbildung geeignete Komponente enthält,

- einen Rohrreaktor als Oligomerisierungszone,

- einen Abzug aus der Oligomerisierungszone mit einer Vorrichtung zur Druckminderung,

- einen Entspannungsbehälter zur Abscheidung der wasserhaltigen Gasphase von der die Polyamid-Oligomeren enthaltenden Flüssigphase, ohne dass eine Polyamid-haltige feste Phase gebildet wird,

- einen Abzug aus dem Entspannungsbehälter zum Austrag der Flüssigphase.

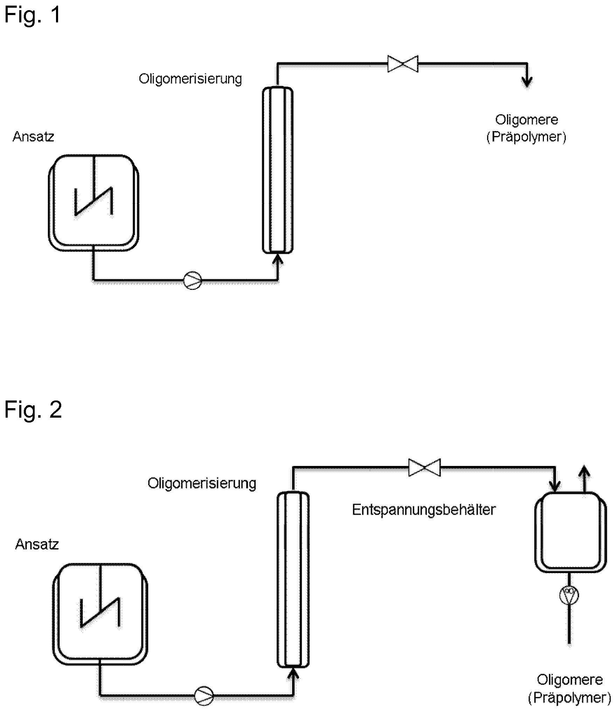

In einer speziellen Ausführungsform der in Figur 2 abgebildeten Vorrichtung ist der Abzug aus dem Entspannungsbehälter temperierbar ausgeführt.

BESCHREIBUNG DER ERFINDUNG

Das erfindungsgemäße Verfahren weist die folgenden Vorteile auf:

- Das erfindungsgemäße Verfahren ermöglicht die kontinuierliche Herstellung von Polyamid-Oligomeren, so dass die typischen Nachteile eines Batch-Verfahrens, wie Limitierung der Ansatzgröße, Zeitverlust durch Befüllung, Entleerung und Reinigung des Reaktionsbehälters, Neigung zur Bildung von Ablagerungen an der Innenwand des Reaktionsbehälters, etc. vermieden werden.

- Die Polyamid-Bildung erfolgt zunächst ohne Stoffaustausch mit der Umgebung, d. h. insbesondere ohne die sofortige Entfernung von Wasser, wie sie viele der aus dem Stand der Technik bekannten Verfahren lehren. Somit kann der Verlust an leichter flüchtigen Monomeren, wie z. B. von Hexamethylendiamin, vermindert bzw. vermieden werden.

- Das erfindungsgemäße Verfahren ermöglicht die Herstellung der Polyamid-Oligomere bei moderaten Temperaturen.

- Das erfindungsgemäße Verfahren ermöglicht den Übergang von einer niedrigen zu einer höheren Reaktionstemperatur und von einem höheren zu einem geringeren Wassergehalt des Reaktionssystems, ohne dass das gebildete Polymer ausfällt.

- Besonders vorteilhaft ist die Ausführung des erfindungsgemäßen Verfahrens mit Entspannung des Austrags aus der Oligomerisierungszone in einem separaten Behälter unter Erhalt einer flüssigen Oligomerphase und gegebenenfalls einer Nachpolymerisation in der Entspannungszone. So können Oligomere mit höherem Molekulargewicht, geringerem Wassergehalt und niedriger Polydispersität erhalten werden, die sich besonders gut für einen weiteren Molekulargewichtsaufbau eignen.

Die im Rahmen dieser Anmeldung beschriebenen Glasübergangstemperaturen (Tg), Schmelztemperaturen (Tm) und Schmelzwärmen ($\Delta$H) können mittels Differential Scanning Calorimetry (DSC) bestimmt werden. Die DSC-Messung wird an ein- und derselben Probe zweckmäßigerweise ein- bis zweimal wiederholt, um eine definierte thermische Vorgeschichte des jeweiligen Polyamids sicherzustellen. In der Regel werden die Werte der zweiten Messung angegeben, was durch den Index "2" an den Messwerten angezeigt wird ($Tg_2$), ($Tm_2$), ($\Delta H_2$). Die Aufheiz- und Abkühlrate betrug jeweils 20 K/min.

Die Monomere der Säure- und der Diaminkomponente sowie der gegebenenfalls eingesetzten Lactamkomponente bilden durch die Kondensation Wiederholungseinheiten bzw. Endgruppen in Form von Amiden aus, die von den jeweiligen Monomeren abgeleitet sind. Diese machen in der Regel 95 Mol-%, insbesondere 99 Mol-% aller im Copolyamid vorliegenden Wiederholungseinheiten und Endgruppen aus. Daneben kann das Copolyamid auch geringe Mengen anderer Wiederholungseinheiten aufweisen, die aus Abbau- oder Nebenreaktionen der Monomere, beispielsweise der Diamine, resultieren können.

Zur Bezeichnung der Polyamide werden im Rahmen der Erfindung zum Teil fachübliche Kurzzeichen verwendet, die aus den Buchstaben PA sowie darauf folgenden Zahlen und Buchstaben bestehen. Einige dieser Kurzzeichen sind in der DIN EN ISO 1043-1 genormt. Polyamide, die sich von Aminocarbonsäuren des Typs $H_2N\text{-}(CH_2)_x\text{-}COOH$ oder den entsprechenden Lactamen ableiten lassen, werden als PA Z gekennzeichnet, wobei Z die Anzahl der Kohlenstoffatome im Monomer bezeichnet. So steht z. B. PA 6 für das Polymere aus $\varepsilon$-Caprolactam bzw. der $\omega$-Aminocapronsäure. Polyamide, die sich von Diaminen und Dicarbonsäuren der Typen $H_2N\text{-}(CH_2)_x\text{-}NH_2$ und $HOOC\text{-}(CH_2)_y\text{-}COOH$ ableiten lassen, werden als PAZ1Z2 gekennzeichnet, wobei Z1 die Anzahl der Kohlenstoffatome im Diamin und Z2 die Anzahl der Kohlenstoffatome in der Dicarbonsäure bezeichnet. Zur Bezeichnung von Copolyamiden werden die Komponenten in der Reihenfolge ihrer Mengenanteile, durch Schrägstriche getrennt, aufgeführt. So ist z. B. PA 66/610 das Copolyamid aus Hexamethylendiamin, Adipinsäure und Sebacinsäure. Für die erfindungsgemäß eingesetzten Monomere mit einer aromatischen oder cycloaliphatischen Gruppe werden folgende Buchstabenkürzel verwendet: T = Terephthalsäure, I = Isophthalsäure, MXDA = m-Xylylendiamin, IPDA = Isophorondiamin, PACM = 4,4'-Methylenbis(cyclohexylamin), MACM = 2,2'-Dimethyl-4,4'-methylenbis-(cyclohexylamin)

Im Folgenden umfasst der Ausdruck "$C_1$-$C_4$-Alkyl" unsubstituierte, geradkettige und verzweigte $C_1$-$C_4$-Alkylgruppen. Beispiele für $C_1$-$C_4$-Alkylgruppen sind insbesondere Methyl, Ethyl, Propyl, Isopropyl, n-Butyl, Isobutyl, sec.-Butyl, tert.-Butyl (1,1-Dimethylethyl).

Bei den im Folgenden genannten aromatischen Dicarbonsäuren, aliphatischen Dicarbonsäuren, cycloaliphatischen Dicarbonsäuren und Monocarbonsäuren können die Carboxylgruppen jeweils in nicht derivatisierter Form oder in Form von Derivaten vorliegen. Bei Dicarbonsäuren kann keine, eine oder beide Carboxylgruppe(n) in Form eines Derivats vorliegen. Geeignete Derivate sind Anhydride, Ester, Säurechloride, Nitrile und Isocyanate. Bevorzugte Derivate sind Anhydride oder Ester. Anhydride von Dicarbonsäuren können in monomerer oder in polymerer Form vorliegen. Bevorzugte Ester sind Alkylester und Vinylester, besonders bevorzugt $C_1$-$C_4$-Alkylester, insbesondere die Methylester oder Ethylester. Dicarbonsäuren liegen bevorzugt als Mono- oder Dialkylester, besonders bevorzugt Mono- oder Di-$C_1$-$C_4$-alkylester, besonders bevorzugt Monomethylester, Dimethylester, Monoethylester oder Diethylester vor. Dicarbonsäuren liegen weiterhin bevorzugt als Mono- oder Divinylester vor. Dicarbonsäuren liegen weiterhin bevorzugt als gemischte Ester, besonders bevorzugt gemischte Ester mit unterschiedlichen $C_1$-$C_4$-Alkylkomponenten, insbesondere Methylethylester vor.

Schritt a)

In Schritt a) des erfindungsgemäßen Verfahrens wird eine wässrige Zusammensetzung bereitgestellt, die wenigstens eine zur Polyamidbildung geeignete Komponente enthält.

Bevorzugt sind die zur Polyamidbildung geeigneten Komponenten ausgewählt unter

A) unsubstituierten oder substituierten aromatischen Dicarbonsäuren und Derivaten von unsubstituierten oder substituierten aromatischen Dicarbonsäuren,

B) unsubstituierten oder substituierten aromatischen Diaminen,

C) aliphatischen oder cycloaliphatischen Dicarbonsäuren,

D) aliphatischen oder cycloaliphatischen Diaminen,

E) Monocarbonsäuren,

F) Monoaminen,

G) mindestens dreiwertigen Aminen,

H) Lactamen,

I) ω-Aminosäuren,

K) von A) bis I) verschiedenen, damit cokondensierbaren Verbindungen.

Eine geeignete Ausführungsform sind aliphatische Polyamide. Für aliphatische Polyamide vom Typ PA Z1 Z2 (wie PA 66) gilt die Maßgabe, dass mindestens eine der Komponenten C) oder D) vorhanden sein muss und keine der Komponenten A) und B) vorhanden sein darf. Für aliphatische Polyamide vom Typ PA Z (wie PA 6 oder PA 12) gilt die Maßgabe, dass mindestens die Komponente H) vorhanden sein muss.

Eine bevorzugte Ausführungsform sind teilaromatische Polyamide. Für teilaromatische Polyamide gilt die Maßgabe, dass mindestens eine der Komponenten A) oder B) und mindestens eine der Komponenten C) oder D) vorhanden sein muss.

Die aromatischen Dicarbonsäuren A) sind bevorzugt ausgewählt unter jeweils unsubstituierter oder substituierter Phthalsäure, Terephthalsäure, Isophthalsäure, Naphthalindicarbonsäuren oder Diphenyldicarbonsäuren und den Derivaten und Mischungen der zuvor genannten aromatischen Dicarbonsäuren.

Substituierte aromatische Dicarbonsäuren A) weisen vorzugsweise wenigstens einen (z. B. 1, 2, 3 oder 4) $C_1$-$C_4$-Alkylrest auf. Insbesondere weisen substituierte aromatischen Dicarbonsäuren A) 1 oder 2 $C_1$-$C_4$-Alkylreste auf. Diese sind vorzugsweise ausgewählt unter Methyl, Ethyl, n-Propyl, Isopropyl, n-Butyl, iso-Butyl, sek-Butyl und tert-Butyl, besonders bevorzugt Methyl, Ethyl und n-Butyl, insbesondere Methyl und Ethyl und speziell Methyl. Substituierte aromatische Dicarbonsäuren A) können auch weitere funktionelle Gruppen tragen, welche die Amidierung nicht stören, wie beispielsweise 5-Sulfoisophthalsäure, ihre Salze und Derivate. Bevorzugtes Beispiel hierfür ist das Natriumsalz des 5-Sulfo-isophthalsäuredimethylesters.

Bevorzugt ist die aromatische Dicarbonsäure A) ausgewählt unter unsubstituierter Terephthalsäure, unsubstituierter Isophthalsäure, unsubstituierten Naphthalindicarbonsäuren, 2-Chloroterephthalsäure, 2-Methylterephthalsäure, 5-Methylisophthalsäure und 5-Sulfo-isophthalsäure.

Besonders bevorzugt wird als aromatische Dicarbonsäure A) Terephthalsäure, Isophthalsäure oder ein Gemisch aus Terephthalsäure und Isophthalsäure eingesetzt.

Bevorzugt weisen die nach dem erfindungsgemäßen Verfahren hergestellten teilaromatischen Polyamide (und die in Schritt a) bereitgestellten Präpolymere) einen Anteil von aromatischen Dicarbonsäuren an allen Dicarbonsäuren von wenigstens 50 mol%, besonders bevorzugt von 70 mol% bis 100 mol%, auf. In einer speziellen Ausführungsform weisen die nach dem erfindungsgemäßen Verfahren hergestellten teilaromatischen Polyamide (und die in Schritt a) bereitgestellten Präpolymere) einen Anteil an Terephthalsäure oder Isophthalsäure oder einem Gemisch aus Terephthalsäure und Isophthalsäure bezogen auf alle Dicarbonsäuren von wenigstens 50 mol%, bevorzugt von 70 mol% bis 100 mol%, auf.

Die aromatischen Diamine B) sind bevorzugt ausgewählt unter Bis-(4-amino-phenyl)-methan, 3-Methylbenzidin, 2,2-Bis-(4-aminophenyl)-propan, 1,1-Bis-(4-aminophenyl)-cyclohexan, 1,2-Diaminobenzol, 1,4-Diaminobenzol, 1,4-Diaminonaphthalin, 1,5-Diaminonaphthalin, 1,3-Diaminotoluol(e), m-Xylylendiamin, N,N'-Dimethyl-4,4'-biphenyl-diamin, Bis-(4-methyl-aminophenyl)-methan, 2,2-Bis-(4-methylaminophenyl)-propan oder Gemische davon.

Die aliphatischen oder cycloaliphatischen Dicarbonsäuren C) sind vorzugsweise ausgewählt unter Oxalsäure, Malonsäure, Bernsteinsäure, Glutarsäure, Adipinsäure, Pimelinsäure, Korksäure, Azelainsäure, Sebacinsäure, Undecan-a,co-dicarbonsäure, Dodecan-a,co-dicarbonsäure, Maleinsäure, Fumarsäure oder Itaconsäure, cis- und trans-Cyclohexan-1,2-dicarbonsäure, cis- und trans-Cyclohexan-1,3-dicarbonsäure, cis- und trans-Cyclohexan-1,4-dicarbonsäure, cis- und trans-Cyclopentan-1,2-dicarbonsäure, cis- und trans-Cyclopentan-1,3-dicarbonsäure und Mischungen davon.

Die aliphatischen oder cycloaliphatischen Diamine D) sind vorzugsweise ausgewählt unter Ethylendiamin, Propylendiamin, Tetramethylendiamin, Heptamethylendiamin, Hexamethylendiamin, Pentamethylendiamin, Octamethylendiamin, Nonamethylendiamin, Decamethylendiamin, Undecamethylendiamin, Dodecamethylendiamin, 2-Methylpentamethylendiamin, 2,2,4-Trimethylhexamethylendiamin, 2,4,4-Trimethylhexamethylendiamin, 5-Methylnonamethylendiamin, 2,4-Dimethyloctamethylendiamin, 5-Methylnonandiamin, Bis-(4-aminocyclohexyl)-methan, 3,3'-Dimethyl-4,4'diaminodicyclohexylmethan und Mischungen davon.

Besonders bevorzugt ist das Diamin D) ausgewählt unter Hexamethylendiamin, 2-Methylpentamethylendiamin, Octamethylendiamin, Nonamethylendiamin, 2-Methyl-1,8-octamethylendiamin, Decamethylendiamin, Undecamethylendiamin, Dodecamethylendiamin, Bis-(4-aminocyclohexyl)-methan, 3,3'-Dimethyl-4,4'diaminodicyclohexylmethan und Mischungen davon.

In einer speziellen Ausführung enthalten die teilaromatischen Polyamide wenigstens ein Diamin D) einpolymerisiert, das ausgewählt ist unter Hexamethylendiamin, Bis-(4-aminocyclohexyl)-methan (PACM), 3,3'-Dimethyl-4,4'diaminodicyclohexylmethan (MACM), Isophorondiamin (IPDA) und Mischungen davon.

In einer speziellen Ausführung enthalten die teilaromatischen Polyamide als Diamin D) ausschließlich Hexamethylendiamin einpolymerisiert.

In einer weiteren speziellen Ausführung enthalten die teilaromatischen Polyamide als Diamin D) ausschließlich Bis-(4-aminocyclohexyl)-methan einpolymerisiert.

In einer weiteren speziellen Ausführung enthalten die teilaromatischen Polyamide als Diamin D) ausschließlich 3,3'-Dimethyl-4,4'diaminodicyclohexylmethan (MACM) einpolymerisiert.

In einer weiteren speziellen Ausführung enthalten die teilaromatischen Polyamide als Diamin D) ausschließlich Isophorondiamin (IPDA) einpolymerisiert.

Die aliphatischen und die teilaromatischen Polyamide können wenigstens eine Monocarbonsäure E) einpolymerisiert enthalten. Die Monocarbonsäuren E) dienen dabei der Endverkappung der erfindungsgemäß hergestellten Polyamide. Geeignet sind grundsätzlich alle Monocarbonsäuren, die befähigt sind, unter den Reaktionsbedingungen der Polyamidkondensation mit zumindest einem Teil der zur Verfügung stehenden Aminogruppen zu reagieren. Geeignete Monocarbonsäuren E) sind aliphatische Monocarbonsäuren, alicyclische Monocarbonsäuren und aromatische Monocarbonsäuren. Dazu zählen Essigsäure, Propionsäure, n-, iso- oder tert.-Buttersäure, Valeriansäure, Trimethylessigsäure Capronsäure, Önanthsäure, Caprylsäure, Pelargonsäure, Caprinsäure, Undecansäure, Laurinsäure, Tridecansäure, Myristinsäure, Palmitinsäure, Stearinsäure, Pivalinsäure, Cyclohexancarbonsäure, Benzoesäure, Methylbenzoesäuren, $\alpha$-Naphthalincarbonsäure, $\beta$-Naphthalincarbonsäure, Phenylessigsäure, Ölsäure, Ricinolsäure, Linolsäure, Linolensäure, Erucasäure, Fettsäuren aus Soja, Leinsamen, Ricinus und Sonnenblume, Acrylsäure, Methacrylsäure, Versatic®-Säuren, Koch®-Säuren und Mischungen davon.

Werden als Monocarbonsäuren E) ungesättigte Carbonsäuren oder deren Derivate eingesetzt, kann es sinnvoll sein, in Gegenwart von handelsüblichen Polymerisationsinhibitoren zu arbeiten.

Besonders bevorzugt ist die Monocarbonsäure E) ausgewählt unter Essigsäure, Propionsäure, Benzoesäure und Mischungen davon.

In einer speziellen Ausführung enthalten die aliphatischen und die teilaromatischen Polyamide als Monocarbonsäure E) ausschließlich Propionsäure einpolymerisiert.

In einer weiteren speziellen Ausführung enthalten die aliphatischen und die teilaromatischen Polyamide als Monocarbonsäure E) ausschließlich Benzoesäure einpolymerisiert.

In einer weiteren speziellen Ausführung enthalten die aliphatischen und die teilaromatischen Polyamide als Monocarbonsäure E) ausschließlich Essigsäure einpolymerisiert.

Die aliphatischen und die teilaromatischen Polyamide können wenigstens ein Monoamin F) einpolymerisiert enthalten. Dabei enthalten die aliphatischen Polyamide nur aliphatische Monoamine oder alicyclische Monoamine einpolymerisiert. Die Monoamine F) dienen dabei der Endverkappung der erfindungsgemäß hergestellten Polyamide. Geeignet sind grundsätzlich alle Monoamine, die befähigt sind, unter den Reaktionsbedingungen der Polyamidkondensation mit zumindest einem Teil der zur Verfügung stehenden Carbonsäuregruppen zu reagieren. Geeignete Monoamine F) sind aliphatische Monoamine, alicyclische Monoamine und aromatische Monoamine. Dazu zählen Methylamin, Ethylamin, Propylamin, Butylamin, Hexylamin, Heptylamin, Octylamin, Decylamin, Stearylamin, Dimethylamin, Diethylamin, Dipropylamin, Dibutylamin, Cyclohexylamin, Dicyclohexylamin, Anilin, Toluidin, Diphenylamin, Naphthylamin und Mischungen davon.

Zur Herstellung der aliphatischen und der teilaromatischen Polyamide kann zusätzlich wenigstens ein mindestens dreiwertiges Amin G) eingesetzt werden. Hierzu gehören N'-(6-aminohexyl)hexan-1,6-diamin, N'-(12-aminododecyl)dodecan-1,12-diamin, N'-(6-aminohexyl)dodecan-1,12-diamin, N'-[3-(aminomethyl)-3,5,5-trimethylcyclohexyl]hexan-1,6-diamin, N'-[3-(aminomethyl)-3,5,5-trimethyl-cyclohexyl]dodecan-1,12-diamin, N'-[(5-amino-1,3,3-trimethyl-cyclohexyl)methyl]hexan-1,6-diamin, N'-[(5-amino-1,3,3-trimethyl-cyclohexyl)methyl]dodecan-1,12-diamin, 3-[[[3-(aminomethyl)-3,5,5-trimethyl-cyclohexyl]amino]methyl]-3,5,5-trimethyl-cyclohexanamin, 3-[[(5-amino-1,3,3-trimethyl-cyclohexyl)methylamino]methyl]-3,5,5-trimethyl-cyclohexanamin, 3-(Aminomethyl)-N-[3-(aminomethyl)-3,5,5-trimethyl-cyclohexyl]-3,5,5-trimethylcyclohexanamin. Bevorzugt werden keine mindestens dreiwertigen Amine G) eingesetzt.

Geeignete Lactame H) sind $\varepsilon$-Caprolactam, 2-Piperidon ($\delta$-Valerolatam), 2-Pyrrolidon ($\gamma$-Butyrolactam), Capryllactam, Önanthlactam, Lauryllactam und Mischungen davon.

Geeignete $\omega$-Aminosäuren I) sind 6-Aminocapronsäure, 7-Aminoheptansäure, 11-Aminoundecansäure, 12-Aminododecansäure und Mischungen davon.

Geeignete von A) bis I) verschiedene, damit cokondensierbare Verbindungen K) sind wenigstens dreiwertige Carbonsäuren, Diaminocarbonsäuren, etc.

Geeignete Verbindungen K) sind weiterhin 4-[(Z)-N-(6-Aminohexyl)-C-hydroxy-carbonimidoyl]benzoesäure, 3-[(Z)-N-(6-Aminohexyl)-C-hydroxy-carbonimidoyl]benzoesäure, (6Z)-6-(6-Aminohexylimino)-6-hydroxy-hexancarbonsäure, 4-[(Z)-N-[(5-Amino-1,3,3-trimethyl-cyclohexyl)methyl]-C-hydroxy-carbonimidoyl]benzoesäure, 3-[(Z)-N-[(5-Amino-1,3,3-trimethyl-cyclohexyl)methyl]-C-hydroxy-carbonimidoyl]benzoesäure, 4-[(Z)-N-[3-(Aminomethyl)-3,5,5-trimethyl-cyclohexyl]-C-hydroxy-carbonimidoyl]benzoesäure, 3-[(Z)-N-[3-(Aminomethyl)-3,5,5-trimethyl-cyclohexyl]-C-hydroxy-carbonimidoyl]benzoesäure und Mischungen davon.

In einer bevorzugten Ausführungsform dient das erfindungsgemäße Verfahren zur Herstellung eines aliphatischen Polyamids.

Das Polyamid ist dann vorzugsweise ausgewählt ist unter PA 4, PA 5, PA 6, PA 7, PA 8, PA 9, PA 10, PA 11, PA 12, PA 46, PA 66, PA 666, PA 69, PA 610, PA 612, PA 96, PA 99, PA 910, PA 912, PA 1212, und Copolymeren und Gemischen davon.

Insbesondere handelt es sich bei dem aliphatischen Polyamid um PA 6, PA 66 oder PA 666, ganz besonders bevorzugt um PA 6.

In einer weiteren bevorzugten Ausführungsform dient das erfindungsgemäße Verfahren zur Herstellung eines teilaromatischen Polyamids.

Bevorzugt ist das Polyamid dann ausgewählt unter PA 6.T, PA 9.T, PA8.T, PA 10.T, PA 12.T, PA 6.I, PA 8.I, PA 9.I, PA 10.I, PA 12.I, PA 6.T/6, PA 6.T/10, PA 6.T/12, PA 6.T/6.I, PA6.T/8.T, PA 6.T/9.T, PA 6.T/10T, PA 6.T/12.T, PA 12.T/6.T, PA 6.T/6.I/6, PA 6.T/6.I/12, PA 6.T/6.I/6.10, PA 6.T/6.I/6.12, PA 6.T/6.6, PA 6.T/6.10, PA 6.T/6.12, PA 10.T/6, PA 10.T/11, PA 10.T/12, PA 8.T/6.T, PA 8.T/66, PA 8.T/8.I, PA 8.T/8.6, PA 8.T/6.I, PA 10.T/6.T, PA 10.T/6.6, PA 10.T/10.I, PA 10T/10.I/6.T, PA 10.T/6.I, PA 4.T/4.I/46, PA 4.T/4.I/6.6, PA 5.T/5.I, PA 5.T/5.I/5.6, PA 5.T/5.I/6.6, PA 6.T/6.I/6.6, PA MXDA.6, PA IPDA.I, PA IPDA.T, PA MACM.I, PA MACM.T, PA PACM.I, PA PACM.T, PA MXDA.I, PA MXDA.T, PA 6.T/IPDA.T, PA 6.T/MACM.T, PA 6.T/PACM.T, PA 6.T/MXDA.T, PA 6.T/6.I/8.T/8.I, PA 6.T/6.1/10.T/10.1, PA 6.T/6.I/IPDA.T/IPDA.I, PA 6.T/6.I/MXDA.T/MXDA.I, PA 6.T/6.I/MACM.T/MACM.I, PA 6.T/6.I/PACM.T/PACM.I, PA 6.T/10.T/IPDA.T, PA 6.T/12.T/IPDA.T, PA 6.T/10.T/PACM.T, PA 6.T/12.T/PACM.T, PA 10.T/IPDA.T, PA 12.T/IPDA.T und Copolymeren und Gemischen davon.

Besonders bevorzugt ist das Polyamid dann ausgewählt unter PA 6.T, PA 9.T, PA 10.T, PA 12.T, PA 6.I, PA 9.I, PA 10.I, PA 12.I, PA 6.T/6.I, PA 6.T/6, PA6.T/8.T, PA 6.T/10T, PA 10.T/6.T, PA 6.T/12.T, PA12.T/6.T, PA IPDA.I, PA IPDA.T, PA 6.T/IPDA.T, PA 6.T/6.I/IPDA.T/IPDA.I, PA 6.T/10.T/IPDA.T, PA 6.T/12.T/IPDA.T, PA 6.T/10.T/PACM.T, PA 6.T/12.T/PACM.T, PA 10.T/IPDA.T, PA 12.T/IPDA.T und Copolymeren und Gemischen davon.

Die Herstellung der in Schritt a) bereitgestellten wässrigen Zusammensetzung, die wenigstens eine zur Polyamidbildung geeignete Komponente enthält, kann grundsätzlich nach üblichen, dem Fachmann bekannten Verfahren erfolgen. Ein geeignetes Verfahren zur Bereitstellung einer Salzlösung zur Herstellung von teilaromatischen Polyamid-Oligomeren ist z. B. in der EP 0 693 515 A1 beschrieben.

Die in Schritt a) bereitgestellte Zusammensetzung weist vorzugsweise einen Wassergehalt von 20 bis 55 Gew.-%, besonders bevorzugt von 25 bis 50 Gew.-%, bezogen auf das Gesamtgewicht der Zusammensetzung, auf.

In einer speziellen Ausführungsform wird in Schritt a) eine wässrige Lösung bereitgestellt, die ein Salz aus wenigstens einem Diamin und wenigstens einer Carbonsäure enthält. Diese Lösung weist vorzugsweise einen Wassergehalt von 20 bis 55 Gew.-%, besonders bevorzugt von 25 bis 50 Gew.-%, bezogen auf das Gesamtgewicht der Lösung, auf.

Zusätzlich zu wenigstens einer zur Polyamidbildung geeigneten Komponente und Wasser kann die in Schritt a) bereitgestellte Zusammensetzung weitere Komponenten enthalten. Diese sind vorzugsweise ausgewählt unter Katalysatoren, Kettenreglern, anwendungsbedingten Additiven und Mischungen davon. Geeignete Additive sind Flammschutzmittel, anorganische und organische Stabilisatoren, Gleitmittel, Farbstoffe, Nukleierungsmittel, metallische Pigmente, Metallflitter, metallbeschichtete Partikel, Antistatika, Leitfähigkeitsadditive, Entformungsmittel, optische Aufheller, Entschäumer, Füll- und/oder Verstärkungsmittel, etc.

Zur erfindungsgemäßen Herstellung der Polyamid-Oligomere kann wenigstens ein Katalysator eingesetzt werden. Geeignete Katalysatoren sind vorzugsweise ausgewählt unter anorganischen und/oder organischen Phosphor-, Zinn- oder Bleiverbindungen und deren Mischungen.

Als Katalysatoren geeignete Zinnverbindungen sind z. B. Zinn(II)-oxid, Zinn(II)-hydroxid, Zinn(II)-Salze einoder mehrwertiger Carbonsäuren, z. B. Zinn(II)-dibenzoat, Zinn(II)-di(2-ethylhexanoat), Zinn(II)-oxalat, Dibutylzinnoxid, Butylzinnsäure($C_4H_9$-SnOOH), Dibutyl-Zinn-dilaurat, etc. Geeignete Bleiverbindungen sind z. B. Blei(II)-oxid, Blei(II)-hydroxid, Blei(II)-acetat, basisches Blei(II)-acetat, Blei(II)-carbonat etc.

Bevorzugte Katalysatoren sind Phosphorverbindungen wie Phosphorsäure, phosphorige Säure, hypophosphorige Säure, Phenylphosphonsäure, Phenylphosphinsäure und/oder deren Salze mit 1- bis 3-wertigen Kationen wie z. B. Na, K, Mg, Ca, Zn oder Al und/oder deren Ester wie z. B. Triphenylphosphat, Triphenylphosphit oder Tris-(nonylphenyl)-phosphit. Besonders bevorzugt als Katalysator sind die hypophosphorige Säure und deren Salze wie Natriumhypophosphit.

Bevorzugt werden die Katalysatoren in einer Menge von 0,005 bis 2,5 Gew.-%, bezogen auf das Gesamtgewicht in der in Schritt a) bereitgestellten wässrigen Zusammensetzung, eingesetzt.

Besonders bevorzugt werden hypophosphorige Säure und/oder ein Salz der hypophosphorigen Säure in einer Menge von 50 bis 1000 ppm, besonders bevorzugt von 100 bis 500 ppm, bezogen die Gesamtmenge der zur Polyamidbildung geeigneten Komponenten (= Komponenten A) bis K)), eingesetzt.

Die ringöffnende Lactampolymerisation kann rein hydrolytisch ohne Einsatz eines Katalysators erfolgen. Bei der aktivierten anionischen Lactampolymerisation werden Katalysatoren eingesetzt, welche die Bildung von Lactamanionen ermöglichen. Geeignete Katalysatoren und Aktivatoren sind dem Fachmann bekannt. Die Polykondensation von Aminonitrilen, z. B. die Herstellung von Polyamid 6 aus 6-Aminocapronitril (ACN) kann in Gegenwart eines Heterogenkatalysators, wie TiO$_2$, durchgeführt werden.

Zur Regelung der Molmasse kann wenigstens ein Kettenregler eingesetzt werden. Geeignete Kettenregler sind die zuvor bei den zur Polyamidbildung geeigneten Komponenten genannten Monocarbonsäuren A) und Monoamine F). Bevorzugt ist der Kettenregler ausgewählt unter Essigsäure, Propionsäure, Buttersäure, Valeriansäure, Capronsäure, Laurinsäure, Stearinsäure, 2-Ethylhexansäure, Cyclohexansäure, Benzoesäure, 3-(3,5-di-tert-butyl-4-hydroxyphenyl)propansäure, 3,5-di-tert-butyl-4-hydroxybenzoesäure, 3-(3-tert-butyl-4-hydroxy-5-methylphenyl)propansäure, 2-(3,5-ditert-butyl-4-hydroxybenzylthio)essigsäure, 3,3-bis(3-tert-butyl-4-hydroxyphenyl)-butansäure, Butylamin, Pentylamin, Hexylamin, 2-Ethylhexylamin, n-Octylamin, n-Dodecylamin, n-Tetradecylamin, n-Hexadecylamin, Stearylamin, Cyclohexylamin, 3-(Cyclohexylamino)propylamin, Methylcyclohexylamin, Dimethylcyclohexylamin, Benzylamin, 2-Phenylethylamin, 2,2,6,6-tetramethylpiperidin-4-amin, 1,2,2,6,6-Pentamethylpiperidin-4-amin, 4-Amino-2,6-di-tert-butylphenol und Mischungen davon. Es können auch andere monofunktionelle Verbindungen als Regler eingesetzt werden, die mit einer Amino- oder Säuregruppe reagieren können, wie Anhydride, Isocyanate, Säurehalogenide oder Ester. Zur Regelung des Molekulargewichts kann auch eine Diaminkomponente oder eine Disäurekomponente in einen stöchiometrischen Überschuss eingesetzt werden. Ein derartiger geeigneter Kettenregler ist Hexamethylendiamin. Der Kettenregler kann der in Schritt a) bereitgestellten wässrigen Zusammensetzung zugesetzt werden. Der Kettenregler kann auch dem in Schritt c) entnommenen Austrag aus der Oligomerisierungszone und/oder dem Polyamid-Oligomer vor der Nachpolymerisation zugesetzt werden. Die übliche Einsatzmenge der Kettenregler liegt in einem Bereich von 5 bis 500 mmol pro kg Polyamid-Oligomer, vorzugsweise 10 bis 200 mmol pro kg Polyamid-Oligomer.

Gewünschtenfalls können der in Schritt a) bereitgestellten wässrigen Zusammensetzung weitere von Katalysatoren und Kettenreglern verschiedene Additive zugesetzt werden.

Zu den Additiven, die speziell bereits in Schritt a) zugesetzt werden können, zählen z. B. Antioxidantien, Lichtschutzmittel, übliche Verarbeitungshilfsmittel, Nukleierungsmittel und Kristallisationsbeschleuniger. Füll- und Verstärkungsstoffe hingegen werden vorzugsweise vor und/oder während der abschließenden Nachpolymerisation zugegeben. So können diese z. B. den erfindungsgemäßen Polyamid-Oligomeren bei der Nachpolymerisation in einem Extruder oder Kneter zugegeben werden.

Die Herstellung der wässrigen Zusammensetzung in Schritt a) kann in einer üblichen Reaktionsvorrichtung, z. B. einem Rührkessel, erfolgen. Zur kontinuierlichen Zuführung der wässrigen Zusammensetzung in die Oligomerisierungszone kann der Einsatz von zwei oder mehr als zwei Reaktionsvorrichtungen vorteilhaft sein. Somit kann z. B. in einer geeigneten Ausführung in einem Reaktor ein Ansatz bereitgestellt und aus einem anderen Reaktor eine bereits fertiggestellte Zusammensetzung der Oligomerisierungszone kontinuierlich zugeführt werden. In einer weiteren geeigneten Ausführung wird die wässrige Zusammensetzung in wenigstens einem Reaktor bereitgestellt und dann in ein Vorratsgefäß überführt, aus dem die Zusammensetzung dann kontinuierlich der Oligomerisierungszone zugeführt wird. Der Einsatz von wenigstens zwei Reaktionsvorrichtungen kann auch im Hinblick auf eine Reinigung, Wartung oder einen Produktwechsel vorteilhaft sein.

Zur Herstellung der wässrigen Zusammensetzung in Schritt a) werden die zur Polyamidbildung geeigneten Komponenten, das Wasser und gegebenenfalls eine oder mehrere der zuvor genannten weiteren Komponenten miteinander vermischt. Vorzugsweise erfolgt das Vermischen der Komponenten unter Erwärmung.

Bevorzugt erfolgt die Herstellung der wässrigen Zusammensetzung in Schritt a) unter Bedingungen, bei denen im Wesentlichen noch keine Oligomerisierung erfolgt. Bevorzugt liegt der Gehalt an nicht umgesetzten zur Polyamidbildung geeigneten Komponenten in der in Schritt a) erhaltenen wässrigen Zusammensetzung bei wenigstens 95 Gew.-%, besonders bevorzugt bei wenigstens 98 Gew.-%, bezogen auf das Gesamtgewicht der zur Polyamidbildung geeigneten Komponenten.

Bevorzugt liegt die Temperatur bei der Herstellung der wässrigen Zusammensetzung in Schritt a) in einem Bereich von 80 bis 170 °C, besonders bevorzugt von 100 bis 165 °C.

Bevorzugt erfolgt die Herstellung der wässrigen Zusammensetzung in Schritt a) bei Umgebungsdruck oder unter erhöhtem Druck. Bevorzugt liegt der Druck in einem Bereich von 0,9 bis 50 bar, besonders bevorzugt 1 bis 10 bar. In einer speziellen Ausführung erfolgt die Herstellung der wässrigen Zusammensetzung in Schritt a) beim Eigendruck der Reaktionsmischung.

Bevorzugt erfolgt die Herstellung der wässrigen Zusammensetzung in Schritt a) in einer Inertgasatmosphäre. Geeignete Inertgase sind z. B. Stickstoff, Helium oder Argon. In vielen Fällen ist eine vollständige Inertisierung nicht erforderlich, sondern bereits ein Spülen der Reaktionsvorrichtung mit einem Inertgas vor der Erwärmung der Komponenten ausreichend.

In einer geeigneten Vorgehensweise zur Herstellung einer wässrige Lösung, die ein Salz aus wenigstens einem Diamin und wenigstens einer Carbonsäure enthält, wird die Diamin-Komponente in wenigstens einem Teil des Wassers gelöst in der Reaktionsvorrichtung vorgelegt. Anschließend werden die übrigen Komponenten, vorzugsweise unter Rühren, zugegeben und der Wassergehalt auf die gewünschte Menge eingestellt. Die Reaktionsmischung wird unter Rühren erwärmt, bis eine klare homogene Lösung entstanden ist. Dabei ist beim Erwärmen zu berücksichtigen, dass die Salzbildung in vielen Fällen exotherm verläuft.

Die in Schritt a) erhaltene wässrige Zusammensetzung wird vorzugsweise im Wesentlichen bei der Herstellungstemperatur, d. h. ohne eine Zwischenkühlung, der Oligomerisierungszone zugeführt.

Schritt b)

Unter einer "Oligomerisierung ohne Stoffaustausch mit der Umgebung" wird verstanden, dass nach der Zuführung der in Schritt a) bereitgestellten Zusammensetzung in die Oligomerisierungszone kein Stoffaustausch zwischen der Oligomerisierungszone und der Umgebung stattfindet. Insbesondere wird während der Oligomerisierung kein Gasstrom durch den Behälter geleitet. Somit erfolgt während der Oligomerisierung in Schritt b) kein Eintrag und auch kein Austrag von Komponenten, z. B. von Wasser, aus dem Behälterinneren in die Umgebung und umgekehrt. Ein Austausch von Wärme zwischen dem Behälterinneren und der Umgebung ist bei der erfindungsgemäßen Oligomerisierung in Schritt b) hingegen zugelassen.

Bei der Umsetzung in Schritt b) kann das Reaktionsgemisch einphasig oder zweiphasig vorliegen. Bevorzugt liegt das Rektionsgemisch bei der Umsetzung in Schritt b) einphasig vor. Die einphasige Umsetzung in Schritt b) erfolgt in der flüssigen Phase.

Bei der ebenfalls möglichen zweiphasigen Umsetzung in Schritt b) liegen eine flüssige und eine gasförmige Phase vor. Das erfindungsgemäße Verfahren ermöglicht die Oligomerisierung, ohne dass eine feste Phase entsteht. Dazu werden die zur Oligomerisierung eingesetzten Temperatur- und Druckwerte so gewählt, dass das Reaktionsgemisch vollständig flüssig oder zum Teil im gasförmigen Zustand vorliegt.

Des Weiteren werden bei der zweiphasigen Ausgestaltung der Umsetzung in Schritt b) die zur Oligomerisierung eingesetzten Temperatur- und Druckwerte so gewählt, dass sich im Wesentlichen keine Anteile der zur Polyamidbildung eingesetzten Komponente in der Gasphase befinden. So wurde speziell gefunden, dass die Durchführung der Oligomerisierung in Schritt b) unter dem Eigendruck des Systems besonders vorteilhaft ist. Danach befinden sich selbst beim Einsatz von niedrigsiedenden Komponenten, wie Hexamethylendiamin, im Wesentlichen keine Anteile der zur Polyamidbildung eingesetzten Komponente in der Gasphase.

Zur Durchführung der Oligomerisierung in Schritt b) kann die Oligomerisierungszone aus einem Reaktor bestehen oder kann mehrere (z. B. 2, 3, 4, etc.) gleiche oder verschiedene Reaktoren umfassen. Im einfachsten Fall wird als Oligomerisierungszone ein einzelner Reaktor eingesetzt. Werden mehrere Reaktoren eingesetzt, so können diese jeweils gleiche oder verschiedene Temperaturen und/oder Drücke aufweisen. Werden mehrere Reaktoren eingesetzt, so können diese jeweils gleiche oder verschiedene Vermischungscharakteristiken aufweisen. Die einzelnen Reaktoren können gewünschtenfalls durch Einbauten ein- oder mehrfach unterteilt sein. Zwei oder mehrere Reaktoren können untereinander beliebig verschaltet sein, z. B. parallel oder in Reihe.

Geeignete Reaktionsapparaturen für die Oligomerisierung sind dem Fachmann bekannt. Dazu zählen die allgemein üblichen Reaktoren für Flüssig- und Gas-flüssig-Reaktionen, wie z. B. Rohrreaktoren, Rührkessel, etc., die gegebenenfalls durch Einbauten unterteilt sein können. Die Reaktoren können gewünschtenfalls Schüttungen oder Packungen enthalten. Dazu zählen z. B. Füllkörper, wie Raschig Pall-Ringe oder Packungen, wie Sulzer-Packungen, Raschig Ralu-Pack oder Füllungen aus Monofilamentgeweben. Somit lässt sich die Verweilzeitcharakteristik modifizieren, z. B. um eine engere Verweilzeitverteilung zu erzielen.

In einer geeigneten Ausführungsform umfasst die zur Umsetzung in Schritt b) eingesetzte Oligomerisierungszone eine Kaskade aus wenigstens zwei Rührkesseln oder besteht aus einer Kaskade aus wenigstens zwei Rührkesseln.

Vorzugsweise wird für die Oligomerisierung in Schritt b) wenigstens ein Rohrreaktor eingesetzt. Eine bevorzugte Ausgestaltung eines Rohrreaktors ist der Rohrbündelreaktor. In einer bevorzugten Ausführungsform umfasst die zur Umsetzung in Schritt b) eingesetzte Oligomerisierungszone somit wenigstens einen Rohrreaktor oder besteht aus wenigstens einem Rohrreaktor. Beim Einsatz dieser Reaktoren können Produkte mit einer besonders geringen Polydispersität (PD) erhalten werden.

Die zur Umsetzung in Schritt b) eingesetzten Rohrreaktoren oder Rohrbündelreaktoren sind in einer bevorzugten Ausführung nicht rückvermischt. Sie weisen somit vorzugsweise keine rückvermischenden Einbauten auf.

Die zur Umsetzung in Schritt b) eingesetzten Rohrreaktoren oder Rohrbündelreaktoren können in einer geeigneten Ausgestaltung weitgehend isotherm betrieben werden.

Dazu können in geeigneter Weise Wärmeübertragungsflächen außerhalb oder im Inneren der Reaktoren angeordnet sein. Bevorzugt befinden sich die Wärmeübertragungsflächen zumindest an dem Ende der Rohrreaktoren oder Rohrbündelreaktoren, an dem die in Schritt a) bereitgestellte Lösung in die Oligomerisierungszone eintritt (eintrittsseitiges Ende; Anfang). Wie bereits ausgeführt, wird die in Schritt a) bereitgestellte Lösung temperiert in die Oligomerisierungszone eingespeist.

Die Temperatur in der Oligomerisierungszone liegt bevorzugt in einem Bereich von etwa 200 bis 290 °C, besonders bevorzugt von 220 bis 260 °C, insbesondere von 230 bis 250 °C.

Werden mehrere Reaktoren eingesetzt, so können diese gleiche oder verschiedene Temperaturen aufweisen. Des Gleichen kann ein Reaktor mehrere Reaktionsbereiche aufweisen, die bei verschiedenen Temperaturen betrieben werden. So kann beispielsweise in einem zweiten Reaktionsbereich eines einzelnen Reaktors eine höhere Temperatur als im ersten Reaktionsbereich oder im zweiten Reaktor einer Reaktorkaskade eine höhere Temperatur als im ersten Reaktor eingestellt werden, z. B. um einen möglichst vollständigen Umsatz zu erzielen und/oder geringere Nebenreaktionen zu haben.

Der absolute Druck in der Oligomerisierungszone liegt bevorzugt in einem Bereich von 20 bis 100 bar, besonders bevorzugt in einem Bereich von 25 bis 60 bar. Der Reaktionsdruck kann beim Einsatz mehrerer Reaktoren in den einzelnen Reaktoren unterschiedlich sein.

Bevorzugt liegt die Verweilzeit der Zusammensetzung in der Oligomerisierungszone in Schritt b) in einem Bereich von 10 Minuten bis 6 Stunden, besonders bevorzugt von 30 Minuten bis 3 Stunden.

Schritt c)

In Schritt c) wird aus der Oligomerisierungszone ein Austrag entnommen, der die Polyamid-Oligomeren enthält. Wie zuvor ausgeführt, ermöglicht das erfindungsgemäße Verfahren die Oligomerisierung, ohne dass eine feste Phase entsteht. Dementsprechend weist auch der Austrag aus der Oligomerisierungszone speziell keine Polyamid-Oligomere enthaltende feste Phase auf.

Bevorzugt weisen die in dem Austrag aus der Oligomerisierungszone enthaltenen Polyamid-Oligomeren ein möglichst hohes zahlenmittleres Molekulargewicht $M_n$ auf, mit der Maßgabe, dass sich keine feste Phase bildet (d. h. das Polymer nicht ausfällt). Die Steuerung des Molekulargewichts kann dabei beispielsweise über den Wassergehalt, die Temperatur in der Oligomerisierungszone und/oder die Verweilzeit in der Oligomerisierungszone erfolgen. Bevorzugt weisen die in dem Austrag aus der Oligomerisierungszone enthaltenen Polyamid-Oligomeren ein zahlenmittleres Molekulargewicht $M_n$ von wenigstens 500 g/mol, besonders bevorzugt von wenigstens 600 g/mol, insbesondere von wenigstens 700 g/mol, auf. Ein geeigneter Bereich für das zahlenmittlere Molekulargewicht $M_n$ ist beispielsweise von 500 bis 1500 g/mol.

Schritt d)

1. Variante:

In einer ersten Variante des erfindungsgemäßen Verfahrens wird der in Schritt c) entnommene Austrag aus der Oligomerisierungszone einer Weiterverarbeitung unterzogen (= Schritt d), ohne vorher eine flüssige, die Oligomeren enthaltende Phase mit verringertem Wassergehalt zu isolieren. Nach dieser Variante kann auf einen zusätzlichen Apparat für eine Zwischenentspannung verzichtet werden. Die Entfernung des im Austrag aus der Oligomerisierungszone enthaltenen Wassers und der angestrebte Molekulargewichtsaufbau erfolgt dann in einer dafür üblichen, aus dem Stand der Technik bekannten Vorrichtung.

Vorzugsweise wird nach dieser ersten Variante in Schritt d)

d11) der Austrag aus der Oligomerisierungszone ohne eine vorherige Entspannung einer Vorrichtung zur Entfernung von Wasser sowie zur Nachpolymerisation zugeführt, die vorzugsweise ausgewählt ist unter Extrudern, Knetern, Strangentgasern oder einer Kombination aus wenigstens zwei dieser Vorrichtungen,
oder

d12) der Austrag aus der Oligomerisierungszone einer vollständigen Entspannung unter Erhalt einer wasserhaltigen Gasphase und einer die Oligomeren enthaltenden festen Phase unterzogen und wenigstens einen Teil der wasserhaltigen Gasphase abgetrennt.

Nach der Variante d11) kann der Austrag aus der Oligomerisierungszone im Wesentlichen die gleiche oder eine andere Temperatur aufweisen als der Eintrag in die Vorrichtung zur weiteren Entfernung von Wasser und zur Nachpolymerisation. In einer speziellen Ausführung weist der Austrag aus der Oligomerisierungszone im Wesentlichen die gleiche Temperatur auf, wie der Eintrag in die Vorrichtung zur weiteren Entfernung von Wasser und zur Nachpolymerisation. Nach einer weiteren speziellen Ausführung der Variante d11) weist der Austrag aus der Oligomerisierungszone vorzugsweise im Wesentlichen den gleichen Druck auf, wie der Eintrag in die Vorrichtung zur weiteren Entfernung von Wasser und zur Nachpolymerisation. In einer anderen Ausführungsform wird der Druck des Austrags aus der Oligomerisierungszone vor Eintritt in die Entspannungszone verringert.

In einer speziellen Ausführungsform der Variante d11) wird in Schritt d) der Austrag aus der Oligomerisierungszone zur Entgasung und Nachpolymerisation in einen Entgasungsextruder eingespeist. Entgasungsextruder zur Entgasung eines Polymermaterials sind dem Fachmann prinzipiell bekannt und z. B. in der EP 0 490 359 A1 und der WO 2009/040189 beschrieben. Bekannte Entgasungsextruder sind üblicherweise so aufgebaut, dass der zu entgasende Materialstrom in der Regel auf der Antriebsseite in einer Einspeisezone der/den Extruderschnecke(n) zugeführt wird und das Extrudat entgast und zur Schneckenspitze hin gefördert wird. Dabei erfolgt nach Durchlaufen einer oder mehrerer Zonen erhöhten Drucks im Extruder üblicherweise stromabwärts eine Druckentlastung des Materials, bei welcher eine Entgasung erfolgt. Die Entgasung kann dabei bei einem gegenüber der Einspeisezone verringertem Überdruck, bei Atmosphärendruck oder unter Zuhilfenahme von Vakuum erfolgen. Vorzugsweise wird zur Nachpolymerisation des Austrags aus der Oligomerisierungszone die Temperatur stromabwärts der Einspeisezone erhöht. In einer weiteren speziellen Ausführungsform der Variante d 11) wird in Schritt d) der Austrag aus der Oligomerisierungszone zur Entgasung und Nachpolymerisation in einen Kneter eingespeist.

Nach der Variante d12) wird der Austrag aus der Oligomerisierungszone einer vollständigen Entspannung unter Erhalt einer wasserhaltigen Gasphase und einer die Oligomeren enthaltenden festen Phase unterzogen und wenigstens ein Teil der wasserhaltigen Gasphase abgetrennt.

Der Austrag aus der Oligomerisierungszone wird zum Beispiel durch Versprühen über eine Düse oder über Vertropfen in einen Entspannungsbehälter (z. B. einen Sprühturm) in diskrete Tropfen überführt, die in der Regel unmittelbar anschließend zu Polyamid-Teilchen verfestigt werden. Die Behandlung des Austrags aus der Oligomerisierungszone nach der Variante d12) kann in Apparaten durchgeführt werden, die auch zur Sprühtrocknung geeignet sind. Derartige Apparate werden beispielsweise in K. Masters, Spray Drying Handbook, 5th Edition, Longman, 1991, S. 23-66, beschrieben.

Vorzugsweise wird der Austrag aus der Oligomerisierungszone durch Versprühen, z. B. in einem Zyklon oder Sprühturm, entspannt. Dabei wird zumindest ein Teil des im Austrag aus der Oligomerisierungszone gelösten Wassers schlagartig verdampft und die Oligomeren in fester Form erhalten. Bei dieser Vorgehensweise fallen die Polyamid-Oligomeren vorzugsweise in feinteiliger kristallisierter Form an. Je nach Menge des bei diesem Vorgang verdampften Wassers werden die Oligomerisat-Partikel gleichzeitig mehr oder weniger stark abgekühlt. Dies kann jedoch durch Beheizung des Entspannungsbehälters teilweise oder vollständig vermieden werden.

Im erfindungsgemäßen Verfahren können eine oder mehrere Sprühdüsen eingesetzt werden. Die einsetzbaren Sprühdüsen unterliegen prinzipiell keiner Beschränkung. Der zu versprühende Austrag aus der Oligomerisierungszone kann den Düsen unter Druck zugeführt werden. Gewünschtenfalls kann der Druck des Austrags aus der Oligomerisierungszone vor dem Versprühen verringert werden, z. B. durch ein oder mehrere Druckreduzierventile.

Der Entspannungsbehälter kann von einem Gas durchströmt werden. Dabei kann das Gas im Gleichstrom oder im Gegenstrom zu den Polyamid-Oligomer-Tropfen bzw. Teilchen durch den Entspannungsbehälter geführt werden, Das Gas ist vorzugsweise ausgewählt unter Gasen, die sich inert verhalten, wie Luft, Stickstoff, etc.

Der Entspannungsbehälter kann zur Entfernung von Wasser und/oder zur Nachpolymerisation von einem erhitzten Gas durchströmt werden.

Der Entspannungsbehälter kann gewünschtenfalls mit einer beheizbaren Wandung ausgestattet sein. Durch Beheizung der Wandung auf eine Temperatur oberhalb der Innentemperatur des Entspannungsbehälters kann eine Kondensatbildung an der Wandung vermindert oder vermieden werden.

Die nach der Variante d12) erhaltenen Polyamid-Oligomer-Teilchen können einer Nachpolymerisation nach üblichen, dem Fachmann bekannten Verfahren unterzogen werden. Dazu zählen die bekannten Verfahren zur Polymerisation in der Schmelze oder in der Festphase. Solche Verfahren werden im Folgenden näher beschrieben.

2. Variante:

In einer zweiten bevorzugten Variante des erfindungsgemäßen Verfahrens wird in Schritt d) das Produkt der Oligomerisierung in einer Entspannungszone einer Entspannung unter Erhalt einer wasserhaltigen Gasphase und einer die Oligomeren enthaltenden Flüssigphase unterzogen und wenigstens ein Teil der wasserhaltigen Gasphase abgetrennt. Speziell wird in Schritt d) keine Polyamid-Oligomere enthaltende feste Phase erhalten.

Vorzugsweise wird in Schritt d) der Austrag aus der Oligomerisierungszone einer teilweisen Entspannung unterzogen. Unter einer "teilweisen Entspannung" wird dabei eine Entspannung auf einen Druck verstanden, der unterhalb des Drucks in der Oligomerisierungszone (oder, wenn die Oligomerisierungszone mehrere Reaktoren aufweist, auf einen Druck, der unterhalb des Drucks in dem Reaktor liegt, aus dem der Austrag entnommen wird), aber oberhalb des Umgebungsdrucks liegt.

Zur Entspannungsverdampfung wird der Austrag aus der Oligomerisierungszone in eine Entspannungszone eingespeist und darin einer Reduzierung des Drucks unterzogen, wobei Wasserdampf gebildet wird. Die Entspannungszone kann dabei einen oder mehrere Entspannungsbehälter umfassen. Geeignete Entspannungsbehälter umfassen in der Regel einen druckfesten geschlossenen Behälter, eine Zuführvorrichtung für das Polyamid aus der Oligomerisierungszone, eine Druckmindervorrichtung, eine Entnahmevorrichtung für die wasserhaltige Gasphase und eine Entnahmevorrichtung für die Polyamid-Oligomeren enthaltende Flüssigphase. Die Entspannung kann einstufig oder mehrstufig erfolgen. Bei der mehrstufigen Entspannung wird der Austrag aus der Oligomerisierungszone in einen ersten Entspannungsbehälter eingespeist und darin einer ersten Teilreduzierung des Drucks unterzogen, die gebildete erste wasserhaltige Gasphase abgetrennt und die Flüssigphase in einen zweiten Entspannungsbehälter eingespeist und darin einer zweiten Teilreduzierung des Drucks unter Bildung einer zweiten wasserhaltigen Gasphase unterzogen, die wiederum abgetrennt wird. Gewünschtenfalls können sich weitere Entspannungsstufen bis zum Erreichen des gewünschten Enddrucks anschließen. Im einfachsten Fall wird die Entspannungszone von einem einzigen Entspannungsbehälter gebildet. Die Entspannungsbehälter können gerührt oder ungerührt ausgeführt sein. Da der nach dem erfindungsgemäßen Verfahren erhaltene Austrag aus der Oligomerisierungszone im Allgemeinen keine sehr hohe Viskosität aufweist, ist es in der Regel unkritisch, wenn die Entspannungsbehälter ungerührt ausgeführt sind.

Die nach der zweiten Variante in Schritt d) erhaltene Wasserphase kann aus dem System ausgeschleust werden. In einer geeigneten Ausführung des erfindungsgemäßen Verfahrens wird die in Schritt c) erhaltene Wasserphase zumindest teilweise zur Herstellung der wässrigen Zusammensetzung in Schritt a) eingesetzt. Somit können in der in Schritt c) erhaltenen Wasserphase enthaltene, zur Polyamidbildung geeignete Komponenten (wie Hexamethylendiamin) zurückgeführt werden.

Vorzugsweise wird nach der zweiten Variante des erfindungsgemäßen Verfahrens in Schritt c) keine Polyamid-Oligomere enthaltende feste Phase erhalten.

Vorzugsweise weist die nach der zweiten Variante in Schritt c) erhaltene, die Polyamid-Oligomeren enthaltende Flüssigphase einen Wassergehalt von wenigstens 20 Gew.-%, bezogen auf das Gesamtgewicht der Flüssigphase, auf.

Vorzugsweise wird nach der zweiten Variante in Schritt c) der Austrag aus der Oligomerisierungszone auf einen absoluten Druck entspannt, der um wenigstens 5 bar, bevorzugt um wenigstens 10 bar, insbesondere um wenigstens 15 bar, unterhalb des Drucks in der Oligomerisierungszone liegt. Weist die Oligomerisierungszone mehrere Reaktoren auf, die bei unterschiedlichen Drücken betrieben werden, so wird der Austrag aus der Oligomerisierungszone auf einen absoluten Druck entspannt, der um wenigstens 5 bar, bevorzugt um wenigstens 10 bar, insbesondere um wenigstens 15 bar, unterhalb des Drucks in dem Reaktor liegt, aus dem der Austrag entnommen wird.

Vorzugsweise liegt nach der zweiten Variante in Schritt c) der absolute Druck in der Entspannungszone in einem Bereich von 20 bis 50 bar, bevorzugt von 22 bis 35 bar.

Die Temperatur in der Entspannungszone kann nach der zweiten Variante in Schritt c) niedriger, gleich hoch oder höher sein als die Temperatur des Austrags aus der Oligomerisierungszone. Vorzugsweise unterscheidet sich die Temperatur in der Entspannungszone kann nach der zweiten Variante in Schritt c) um höchstens 30 °C, besonders bevorzugt um höchstens 20 °C, insbesondere um höchstens 10 °C, von der Temperatur des Austrags aus der Oligomerisierungszone. Der Fachmann kann einen geeigneten Temperaturbereich auch nach Maßgabe der gewünschten Weiterverarbeitung des Polyamid-Oligomers, wie z. B. einer Nachpolymerisation in der Festphase oder in der Schmelze, wählen.

Vorzugsweise liegt nach der zweiten Variante in Schritt c) die Temperatur in der Entspannungszone in einem Bereich von 170 bis 290 °C, besonders bevorzugt von 200 bis 260 °C.

Die nach der Entspannung in Schritt c) erhaltene, die Polyamid-Oligomeren enthaltende Flüssigphase kann unmittelbar im Anschluss an die Entspannung ausgetragen und einer Nachpolymerisation unterzogen werden. Geeignete Verfahren und Vorrichtungen zur Nachpolymerisation sind dem Fachmann bekannt und werden im Folgenden noch näher beschrieben.

In einer bevorzugten Ausführungsform wird die nach der Entspannung in Schritt c) erhaltene, die Polyamid-Oligomeren enthaltende Flüssigphase einer Nachpolymerisation in der Entspannungszone unterzogen (= Schritt d).

Schritt d) (Nachpolymerisation in der Entspannungszone)

Vorzugsweise liegt in Schritt d) die Verweilzeit der die Polyamid-Oligomeren enthaltenden Flüssigphase in der Entspannungszone in einem Bereich von 1 Minute bis 1 Stunde, besonders bevorzugt von 5 Minuten bis 30 Minuten.

In einer bevorzugten Ausführungsform ändern sich die Temperatur und der Druck in der Entspannungszone während der Nachpolymerisation im Wesentlichen nicht.

Vorzugsweise liegt in Schritt d) der absolute Druck in der Entspannungszone in einem Bereich von 20 bis 50 bar, bevorzugt von 22 bis 35 bar.

Vorzugsweise liegt in Schritt e) die Temperatur in der Entspannungszone in einem Bereich von 170 bis 290 °C, besonders bevorzugt von 200 bis 260 °C.

Durch die Entspannung in Schritt d) und die Nachpolymerisation in Schritt e) verschiebt sich das Gleichgewicht und das Molekulargewicht des Polyamids steigt. Vorteile der Entspannungsstufe sind die geringere Wasserkonzentration beim folgenden Molekulargewichtsaufbau. Dies führt zu einem geringeren Energiebedarf, einem schnellen Molekulargewichtsaufbau und zur Reduzierung von Nebenreaktionen und Nebenprodukten bei der Weiterverarbeitung und damit zu verbesserten Eigenschaften des Polymers.

Die in dem Austrag der Nachpolymerisation in Schritt e) aus der Entspannungszone enthaltenen Polyamid-Oligomeren weisen vorzugsweise ein zahlenmittleres Molekulargewicht $M_n$ von wenigstens 650 g/mol, bevorzugt von wenigstens 800 g/mol, auf. Bevorzugt weisen die Polyamid-Oligomeren ein möglichst hohes zahlenmittleres Molekulargewicht $M_n$ auf, mit der Maßgabe, dass sich keine feste Phase bildet (d. h. das Polymer nicht ausfällt). Die Steuerung des Molekulargewichts kann dabei beispielsweise über den Wassergehalt, die Temperatur in der Oligomerisierungszone und/oder die Verweilzeit in der Entspannungszone erfolgen. Bevorzugt weisen die durch Nachpolymerisation in der Entspannungszone erhaltenen Polyamid-Oligomeren ein zahlenmittleres Molekulargewicht $M_n$ von bis zu 2500 g/mol, besonders bevorzugt von bis zu 4500 g/mol, auf.

Die in dem Austrag der Nachpolymerisation in Schritt d) aus der Entspannungszone enthaltenen Polyamid-Oligomeren weisen vorzugsweise eine Polydispersität PD von höchstens 4,5 auf.

Der Austrag der die Oligomeren enthaltenden Flüssigphase aus der Entspannungszone erfolgt vorzugsweise über einen temperierbaren Abzug.

In einer speziellen Ausführungsform wird der Austrag aus der Entspannungszone auf eine Temperatur oberhalb der Schmelztemperatur der Polyamid-Oligomeren erhitzt.

Der flüssige Austrag aus der Entspannungszone kann anschließend einer weiteren Polymerisation unterzogen werden. Dies gilt unabhängig davon, ob bereits in der Entspannungszone eine Nachpolymerisation durchgeführt wurde.

Diese weitere Polymerisation kann nach an sich bekannten Verfahren in der Festphase oder in der Schmelze erfolgen.

In einer ersten Ausführungsform wird der flüssige Austrag aus der Entspannung in Schritt d) oder der Nachpolymerisation in Schritt e) einer Trocknung unterzogen. Dazu kann der Austrag z. B. unter Erhalt eines festen Präpolymers versprüht und anschließend weiterverarbeitet werden.

In einer alternativen Ausführung wird der flüssige Austrag aus der Entspannung in Schritt c) oder der Nachpolymerisation in Schritt d) in einem Wärmetauscher in sehr kurzer Zeit über die Schmelztemperatur des Polymers erhitzt und in der Schmelze nachpolymerisiert. Die Nachpolymerisationszeit liegt dabei vorzugsweise in einem Bereich von 30 Sekunden bis 20 Minuten, besonders bevorzugt von 1 Minute bis 10 Minuten. Die Nachpolymerisation in der Schmelze erfolgt dabei vorzugsweise im Wesentlichen bei dem Druck in der Entspannungszone. Zur Weiterverarbeitung kann das Produkt der Schmelzepolymerisation entspannt und gewünschtenfalls einer weiteren Nachpolymerisation unterzogen werden. Dabei entsteht ein zweiphasiges Gemisch (flüssig/gasförmig), ohne dass das Polymer ausfällt.

Schließlich kann der flüssige Austrag aus der Entspannung in Schritt c) oder der Nachpolymerisation in Schritt d) über eine Trocknung und Festphasenpolymerisation zum Endmolekulargewicht gebracht werden.

Die offenbarten und nach dem erfindungsgemäßen Verfahren erhaltenen aliphatischen Polyamide weisen vorzugsweise ein zahlenmittleres Molekulargewicht $M_n$ in einem Bereich von 13000 bis 28000 g/mol auf.

Die offenbarten und nach dem erfindungsgemäßen Verfahren erhaltenen teilaromatischen Polyamide weisen vorzugsweise ein zahlenmittleres Molekulargewicht $M_n$ in einem Bereich von 13000 bis 25000 g/mol, besonders bevorzugt von 15000 bis 20000 g/mol, auf.

Die offenbarten und nach dem erfindungsgemäßen Verfahren erhaltenen aliphatischen Polyamide weisen vorzugsweise ein gewichtsmittleres Molekulargewicht $M_w$ in einem Bereich von 20000 bis 140000 g/mol auf.

Die offenbarten und nach dem erfindungsgemäßen Verfahren erhaltenen teilaromatischen Polyamide weisen vorzugsweise ein gewichtsmittleres Molekulargewicht $M_w$ in einem Bereich von 25000 bis 125000 g/mol auf.

Die offenbarten und nach dem erfindungsgemäßen Verfahren erhaltenen aliphatischen und teilaromatischen Polyamide weisen vorzugsweise eine Polydispersität PD ($= M_w/M_n$) von höchstens 6, besonders bevorzugt von höchstens 5, insbesondere von höchstens 3,5, auf.

Die nach dem erfindungsgemäßen Verfahren erhältlichen aliphatischen Polyamide eignen sich insbesondere zur Herstellung von Folien, Monofilamenten, Fasern, Garnen oder textile Flächengebilden. Dabei erweisen sich die erfindungsgemäß hergestellten aliphatischen Polyamide in der Regel als besonders verarbeitungsstabil während einer Schmelzextrusion durch Breitschlitz- oder ringförmige Düsen zu Flach- oder Blasfolien sowie durch ringförmige Düsen kleineren Durchmessers zu Monofilamenten.

Die nach dem erfindungsgemäßen Verfahren erhältlichen teilaromatischen Polyamide verfügen ebenfalls über vorteilhafte Eigenschaften.

Das offenbarten und nach dem erfindungsgemäßen Verfahren erhaltene teilaromatische Polyamid weist vorzugsweise einen Gelgehalt von höchstens 5 Gew.-%, bezogen auf das Gesamtgewicht des Polyamids, auf.

Das offenbarten und nach dem erfindungsgemäßen Verfahren erhaltene teilaromatische Polyamid weist vorzugsweise eine Viskositätszahl von 80 bis 120 ml/g auf. Die Viskositätszahl (Staudinger-Funktion, bezeichnet mit VZ, VN oder J) ist definiert als $VZ = 1/c \times (\eta - \eta_s)/\eta_s$. Die Viskositätszahl steht in direkter Beziehung zur mittleren molaren Masse des Polyamids und gibt Auskunft über die Verarbeitbarkeit eines Kunststoffes. Die Bestimmung der Viskositätszahl kann nach EN ISO 307 mit einem Ubbelohde-Viskosimeter erfolgen.

Polyamid-Formmasse

Ein weiterer Gegenstand der Erfindung ist eine Polyamid-Formmasse, die wenigstens ein offenbartes teilaromatisches Copolyamid enthält.

Bevorzugt ist eine Polyamid-Formmasse, enthaltend:

A) 25 bis 100 Gew.-% wenigstens eines teilaromatischen Copolyamids, wie zuvor definiert,
B) 0 bis 75 Gew.-% wenigstens eines Füll- und Verstärkungsstoffs,
C) 0 bis 50 Gew.-% wenigstens eines Additivs,

wobei die Komponenten A) bis C) zusammen 100 Gew.-% ergeben.

Der Begriff "Füllstoff und Verstärkungsstoff" (= Komponente B) wird im Rahmen der Erfindung breit verstanden und umfasst partikulare Füllstoffe, Faserstoffe und beliebige Übergangsformen. Partikuläre Füllstoffe können eine weite Bandbreite von Teilchengrößen aufweisen, die von staubförmigen bis grobkörnigen Partikeln reichen. Als Füllmaterial kommen organische oder anorganische Füll- und Verstärkungsstoffe in Frage. Beispielsweise können anorganische Füllstoffe, wie Kaolin, Kreide, Wollastonit, Talkum, Calciumcarbonat, Silikate, Titandioxid, Zinkoxid, Graphit, Glaspartikel, z. B. Glaskugeln, nanoskalige Füllstoffe, wie Kohlenstoff-Nanoröhren (carbon nanotubes), carbon black, nanoskalige Schichtsilikate, nanoskaliges Aluminiumoxid ($Al_2O_3$), nanoskaliges Titandioxid ($TiO_2$), Graphen, dauerhaft magnetische bzw. magnetisierbare Metallverbindungen und/oder Legierungen, Schichtsilikate und nanoskaliges Siliciumdioxid ($SiO_2$), eingesetzt werden. Die Füllstoffe können auch oberflächenbehandelt sein.

Als Schichtsilikate können in den erfindungsgemäßen Formmassen z. B. Kaoline, Serpentine, Talkum, Glimmer, Vermiculite, Illite, Smectite, Montmorillonit, Hectorit, Doppelhydroxide oder Gemische davon eingesetzt werden. Die Schichtsilikate können oberflächenbehandelt oder unbehandelt sein.

Weiterhin können ein oder mehrere Faserstoffe zum Einsatz kommen. Diese sind vorzugsweise ausgewählt aus bekannten anorganischen Verstärkungsfasern, wie Borfasern, Glasfasern, Kohlenstofffasern, Kieselsäurefasern, Keramikfasern und Basaltfasern; organischen Verstärkungsfasern, wie Aramidfasern, Polyesterfasern, Nylonfasern, Polyethylenfasern und Naturfasern, wie Holzfasern, Flachsfasern, Hanffasern und Sisalfasern.

Insbesondere bevorzugt ist der Einsatz von Glasfasern, Kohlenstofffasern, Aramidfasern, Borfasern, Metallfasern oder Kaliumtitanatfasern.

Speziell werden Schnittglasfasern eingesetzt. Insbesondere umfasst die Komponente B) Glas- und/oder Kohlenstofffasern, wobei bevorzugt Kurzfasern eingesetzt werden. Diese weisen vorzugsweise eine Länge im Bereich von 2 bis 50 mm und einem Durchmesser von 5 bis 40 $\mu$m auf. Alternativ können Endlosfasern (Rovings) eingesetzt werden. Geeignet sind Fasern mit kreisförmiger und/oder nicht-kreisförmiger Querschnittsfläche, wobei im letzteren Fall das Abmessungsverhältnis von der Hauptquerschnittsachse zur Nebenquerschnittsachse insbesondere > 2 ist, bevorzugt im Bereich von 2 bis 8 und besonders bevorzugt im Bereich von 3 bis 5 liegt.

In einer speziellen Ausführung umfasst die Komponente B) sogenannte "flache Glasfasern". Diese weisen speziell eine ovale oder elliptische oder eine mit Einschnürung(en) versehene elliptische (sog. "Kokon"-oder "cocoon"-Faser) oder rechteckige oder nahezu rechteckige Querschnittsfläche auf. Dabei werden Glasfasern mit nicht-kreisförmiger Querschnittsfläche und einem Abmessungsverhältnis von der Hauptquerschnittsachse zur Nebenquerschnittsachse von mehr als 2, bevorzugt von 2 bis 8, insbesondere von 3 bis 5, bevorzugt eingesetzt.

Zur Verstärkung der erfindungsgemäßen Formmassen können auch Mischungen von Glasfasern mit kreisförmigem und nicht-kreisförmigem Querschnitt verwendet werden. In einer speziellen Ausführung überwiegt der Anteil an flachen Glasfasern, wie oben definiert, d. h. sie machen mehr als 50 Gew.-% der Gesamtmasse der Fasern aus.

Wenn als Komponente B) Rovings von Glasfasern eingesetzt werden, weisen diese vorzugsweise einen Durchmesser von 10 bis 20 $\mu$m, bevorzugt von 12 bis 18 $\mu$m, auf. Dabei kann der Querschnitt der Glasfasern rund, oval, elliptisch, nahezu rechteckig oder rechteckig sein. Besonders bevorzugt werden sogenannte flache Glasfasern mit einem Verhältnis der Querschnittsachsen von 2 bis 5. Insbesondere werden E-Glasfasern verwendet. Es können aber auch alle anderen Glasfasersorten, wie z. B. A-, C-, D-, M-, S-, R-Glasfasern oder beliebige Mischungen davon oder Mischungen mit E-Glasfasern eingesetzt werden.

Die erfindungsgemäßen Polyamid-Formmassen können durch die bekannten Verfahren zur Herstellung von langfaserverstärktem Stäbchengranulat hergestellt werden, insbesondere durch Pultrusionsverfahren, bei denen der endlose Faserstrang (Roving) mit der Polymerschmelze vollständig durchtränkt und anschließend abgekühlt und geschnitten wird. Das auf diese Art und Weise erhaltene langfaserverstärkte Stäbchengranulat, das bevorzugt eine Granulatlänge von 3 bis 25 mm, insbesondere von 4 bis 12 mm, aufweist, kann mit den üblichen Verarbeitungsverfahren, wie z. B. Spritzgießen oder Pressen, zu Formteilen weiterverarbeitet werden.

Die erfindungsgemäße Polyamid-Formmasse enthält bevorzugt 25 bis 75 Gew.-%, besonders bevorzugt 33 bis 60 Gew.-%, mindestens eines Füll- und Verstärkungsstoffs B), bezogen auf das Gesamtgewicht der Polyamid-Formmasse.

Geeignete Additive C) sind Wärmestabilisatoren, Flammschutzmittel, Lichtschutzmittel (UV-Stabilisatoren, UV-Absorber oder UV-Blocker), Gleitmittel, Farbstoffe, Nukleierungsmittel, metallische Pigmente, Metallflitter, metallbeschichtete Partikel, Antistatika, Leitfähigkeitsadditive, Entformungsmittel, optische Aufheller, Entschäumer, etc.

Als Komponente C) enthalten die erfindungsgemäßen Formmassen vorzugsweise 0,01 bis 3 Gew.-%, besonders bevorzugt 0,02 bis 2 Gew.-%, insbesondere 0,1 bis 1,5 Gew.-% mindestens eines Wärmestabilisators.

Bevorzugt sind die Wärmestabilisatoren ausgewählt unter Kupferverbindungen, sekundären aromatischen Aminen, sterisch gehinderten Phenolen, Phosphiten, Phosphoniten und Mischungen davon.

Sofern eine Kupferverbindung verwendet wird, beträgt vorzugsweise die Menge an Kupfer 0,003 bis 0,5, insbesondere 0,005 bis 0,3 und besonders bevorzugt 0,01 bis 0,2 Gew.-%, bezogen auf die Summe der Komponenten A) bis C).

Sofern Stabilisatoren auf Basis sekundärer aromatischer Amine verwendet werden, beträgt die Menge an diesen Stabilisatoren vorzugsweise 0,2 bis 2 Gew.-%, besonders bevorzugt von 0,2 bis 1,5 Gew.-%, bezogen auf die Summe der Komponenten A) bis C).

Sofern Stabilisatoren auf Basis sterisch gehinderter Phenole verwendet wird, beträgt die Menge an diesen Stabilisatoren vorzugsweise 0,1 bis 1,5 Gew.-%, besonders bevorzugt von 0,2 bis 1 Gew.-%, bezogen auf die Summe der Komponenten A) bis C).

Sofern Stabilisatoren auf Basis von Phosphiten und/oder Phosphoniten verwendet werden, beträgt die Menge an diesen Stabilisatoren vorzugsweise 0,1 bis 1,5 Gew.-%, besonders bevorzugt von 0,2 bis 1 Gew.-%, bezogen auf die Summe der Komponenten A) bis C).

Geeignete Verbindungen C) des ein- oder zweiwertigen Kupfers sind z. B. Salze des ein- oder zweiwertigen Kupfers mit anorganischen oder organischen Säuren oder ein-oder zweiwertigen Phenolen, die Oxide des ein- oder zweiwertigen Kupfers oder die Komplexverbindungen von Kupfersalzen mit Ammoniak, Aminen, Amiden, Lactamen, Cyaniden oder Phosphinen, bevorzugt Cu(I)- oder Cu(II)-Salze der Halogenwasserstoffsäuren, der Cyanwasserstoffsäuren oder die Kupfersalze der aliphatischen Carbonsäuren. Besonders bevorzugt sind die einwertigen Kupferverbindungen CuCl, CuBr, CuI, CuCN und $Cu_2O$ sowie die zweiwertigen Kupferverbindungen $CuCl_2$, $Cu-SO_4$, CuO, Kupfer(II)acetat oder Kupfer(II)stearat.

Die Kupferverbindungen sind handelsüblich bzw. ihre Herstellung ist dem Fachmann bekannt. Die Kupferverbindung kann als solche oder in Form von Konzentraten eingesetzt werden. Unter Konzentrat ist dabei ein Polymer, vorzugsweise von gleicher chemischer Natur wie die Komponente A), zu verstehen, welches das Kupfersalz in hoher Konzentration enthält. Der Einsatz von Konzentraten ist ein übliches Verfahren und wird besonders häufig dann angewandt, wenn sehr geringe Mengen eines Einsatzstoffes zu dosieren sind. Vorteilhafterweise werden die Kupferverbindungen in Kombination mit weiteren Metallhalogeniden, insbesondere Alkalihalogeniden, wie NaI, KI, NaBr, KBr, eingesetzt, wobei das molare Verhältnis von Metallhalogenid zu Kupferhalogenid 0,5 bis 20, bevorzugt 1 bis 10 und besonders bevorzugt 3 bis 7, beträgt.

Besonders bevorzugte Beispiele für erfindungsgemäß einsetzbare Stabilisatoren auf Basis sekundärer aromatischer Amine sind Addukte aus Phenylendiamin mit Aceton (Naugard A), Addukte aus Phenylendiamin mit Linolensäure, 4,4'-Bis($\alpha,\alpha$-dimethylbenzyl)diphenylamin (Naugard ® 445), N,N'-Dinaphthyl-p-phenylendiamin, N-Phenyl-N'-cyclohexyl-p-phenylendiamin oder Mischungen von zwei oder mehreren davon.

Bevorzugte Beispiele für erfindungsgemäß einsetzbare Stabilisatoren auf Basis sterisch gehinderter Phenole sind N,N'-Hexamethylen-bis-3-(3,5-di-tert-butyl-4-hydroxyphenyl)-propionamid, Bis-(3,3-bis-(4'-hydroxy-3'-tert-butylphenyl)-butansäure)-glykolester, 2,1'-Thioethylbis-(3-(3,5-di.tert-butyl-4-hydroxyphenyl)-propionat, 4-4'-Butyliden-bis-(3-methyl-6-tert.-butylphenol), Triethylenglykol-3-(3-tert-butyl-4-hydroxy-5-methylphenyl)-propionat oder Mischungen von zweien oder mehreren dieser Stabilisatoren.

Bevorzugte Phosphite und Phosphonite sind Triphenylphosphit, Diphenylalkylphosphit, Phenyldialkylphosphit, Tris(nonylphenyl)phosphit, Trilaurylphosphit, Trioctadecylphosphit, Distearylphentaerythritoldiphosphit, Tris(2,4-di-tert-butylphenyl)phosphit, Diisodecylpentaerythritoldiphosphit, Bis(2,4-di-tert-butylphenyl)pentaerythritoldiphosphit, Bis(2,6-di-tert-butyl-4-methylphenyl)-pentaerythritoldiphosphit, Diisodecyloxypentaerythritoldiphosphit, Bis(2,4-di-tert-butyl-6-methylphenyl)pentaerythritoldiphosphit, Bis(2,4,6-tris-(tert-butylphenyl))pentaerythritoldiphosphit, Tristearylsorbitoltriphosphit, Tetrakis-(2,4-di-tert-butylphenyl)-4,4'-biphenylendiphosphonit, 6-Isooctyloxy-2,4,8,10-tetra-tert-butyl-12H-dibenz-[d,g]-1,3,2-dioxaphosphocin, 6-Fluoro-2,4,8,10-tetra-tert-butyl- 12-methyl-dibenz[d,g]-1,3,2-dioxaphosphocin, Bis(2,4-di-tert- butyl-6-methylphenyl)methylphosphit und Bis(2,4-di-tert-butyl-6-methylphenyl)ethylphosphit. Insbesondere werden bevorzugt Tris[2-tert-butyl-4-thio(2'-methyl-4'-hydroxy-5'-tert-butyl)-phenyl-5-methyl]phenylphosphit und Tris(2,4-di-tert-butylphenyl)phosphit (Hostanox ® PAR24: Handelsprodukt der Firma BASF SE).

Eine bevorzugte Ausführungsform des Wärmestabilisators besteht in der Kombination von organischen Hitzestabilisatoren (insbesondere Hostanox PAR 24 und Irganox 1010), einem Bisphenol A basiertem Epoxid (insbesondere Epikote 1001) und einer Kupferstabilisierung auf Basis von CuI und KI. Eine kommerziell erhältliche Stabilisatormischung, bestehend aus organischen Stabilisatoren und Epoxiden ist beispielsweise Irgatec NC66 von BASF SE. Insbesondere bevorzugt wird eine Wärmestabilisierung ausschließlich auf Basis von CuI und KI. Neben dem Zusatz von Kupfer oder Kupferverbindungen wird die Verwendung weiterer Übergangsmetallverbindungen, insbesondere Metallsalze oder Metalloxide der Gruppe VB, VIB, VIIB oder VIIIB des Periodensystems, ausgeschlossen. Darüber hinaus werden der erfindungsgemäßen Formmasse bevorzugt keine Übergangsmetalle der Gruppe VB, VIB, VIIB oder VIIIB des Periodensystems, wie z. B. Eisen- oder Stahlpulver, zugesetzt.

Die erfindungsgemäßen Formmassen enthalten vorzugsweise 0 bis 30 Gew.-%, besonders bevorzugt 0 bis 20 Gew.-%, bezogen auf das Gesamtgewicht der Komponenten A) bis C), mindestens eines Flammschutzmittels als Additiv C). Wenn die erfindungsgemäßen Formmassen mindestens ein Flammschutzmittel enthalten, so vorzugsweise in einer Menge von 0,01 bis 30 Gew.-%, besonders bevorzugt von 0,1 bis 20 Gew.-%, bezogen auf das Gesamtgewichten der Komponenten A) bis C). Als Flammschutzmittel C) kommen halogenhaltige und halogenfreie Flammschutzmittel und deren Synergisten in Frage (siehe auch Gächter/Müller, 3. Ausgabe 1989 Hanser Verlag, Kapitel 11). Bevorzugte halogenfreie Flammschutzmittel sind roter Phosphor, Phosphinsäure- oder Diphosphinsäuresalze , und/oder stickstoffhaltige Flammschutzmittel wie Melamin, Melamincyanurat, Melaminsulfat, Melaminborat, Melaminoxalat, Melaminphosphat (prim, sec.) oder sec. Melaminpyrophosphat, Neopentylglycolborsäuremelamin, Guanidin und dem Fachmann bekannte Derivate davon, sowie polymeres Melaminphosphat (CAS Nr.: 56386-64-2 bzw. 218768-84-4 sowie EP 1095030), Ammoniumpolyphosphat, Trishydroxyethylisocyanurat (gegebenenfalls auch Ammoniumpolyphosphat in Mischung mit Trishydroxyethylisocyanurat) (EP 584567). Weitere N-haltige oder P-haltige Flammschutzmittel oder als Flammschutzmittel geeignete PN-Kondensate können der DE 10 2004 049 342 entnommen werden, ebenso die hierfür üblichen Synergisten wie Oxide oder Borate. Geeignete halogenhaltige Flammschutzmittel sind z.B. oligomere bromierte Polycarbonate (BC 52 Great Lakes) oder Polypentabrombenzylacrylate mit N größer 4 (FR 1025 Dead sea bromine), Umsetzungsprodukte aus Tetrabrom-bis-phenol-A mit Epoxiden, bromierte oligomere oder polymere Styrole, Dechloran, welche meist mit Antimonoxiden als Synergisten eingesetzt werden (Für Einzelheiten und weitere Flammschutzmittel: siehe DE-A-10 2004 050 025).

Als Antistatika können in den erfindungsgemäßen Formmassen z. B. Ruß und/oder Kohlenstoffnanoröhrchen eingesetzt werden. Die Verwendung von Ruß kann aber auch zur Verbesserung der Schwarzfärbung der Formmasse dienen. Die Formmasse kann jedoch auch frei von metallischen Pigmenten sein.

Formkörper

Des Weiteren betrifft die vorliegende Erfindung Formkörper, die unter Verwendung von den offenbarten Copolyamiden bzw. Polyamid-Formmassen hergestellt werden.

Die offenbarten teilaromatischen Polyamide eignen sich vorteilhaft für eine Verwendung zur Herstellung von Formteilen für Elektro- und Elektronikbauteilen und für Automobil-Anwendungen im Hochtemperaturbereich.

Eine spezielle Ausführungsform sind Formkörper in Form oder als Teil eines Bauteils für den Automobilbereich, insbesondere ausgewählt unter Zylinderkopfhauben, Motorabdeckungen, Gehäusen für Ladeluftkühler, Ladeluftkühlerklappen, Ansaugrohren, Ansaugkrümmern, Konnektoren, Zahnrädern, Lüfterrädern, Kühlwasserkästen, Gehäusen oder Gehäuseteilen für Wärmetauscher, Kühlmittelkühlern, Ladeluftkühlern, Thermostaten, Wasserpumpen, Heizkörpern, Befestigungsteilen.

Eine weitere spezielle Ausführungsform sind Formkörper als oder als Teil eines elektrischen oder elektronischen passiven oder aktiven Bauteils, einer Leiterplatte, eines Teils einer Leiterplatte, eines Gehäusebestandteils, einer Folie, einer Leitung, insbesondere in Form oder als Teil eines Schalters, eines Steckers, einer Buchse, eines Verteilers, eines Relais, eines Widerstandes, eines Kondensators, einer Spule oder eines Spulenkörpers, einer Lampe, einer Diode, einer LED, eines Transistors, eines Konnektors, eines Reglers, eines integrierten Schaltkreises (IC), eines Prozessors, eines Controllers, eines Speichers und/oder eines Sensors.

Die offenbarten teilaromatischen Polyamide eignen sich weiterhin speziell für den Einsatz in Lötprozessen unter bleifreien Bedingungen (lead free soldering), zur Herstellung von Steckverbindern, Mikroschaltern, Mikrotastern und Halbleiterbauteilen, insbesondere Reflektorgehäusen von Leuchtdioden (LED).

Eine spezielle Ausführungsform sind Formkörper als Befestigungselemente elektrischer oder elektronischer Bauteile, wie Abstandshalter, Bolzen, Leisten, Einschubführungen, Schrauben und Muttern.

Insbesondere bevorzugt ist ein Formteil in Form oder als Teil eines Sockels, eines Steckverbinders, eines Steckers oder einer Buchse. Bevorzugt beinhaltet das Formteil Funktionselemente, die eine mechanische Zähigkeit erfordern. Beispiele solcher Funktionselemente sind Filmscharniere, Schnapphaken (Snap-in) und Federzungen.

Im Autoinnenraum ist eine Verwendung für Armaturentafeln, Lenkstockschalter, Sitzteile, Kopfstützen, Mittelkonsolen, Getriebe-Komponenten und Türmodule, im Autoaußenraum für Türgriffe, Außenspiegelkomponenten, Scheibenwischerkomponenten, Scheibenwischerschutzgehäuse, Ziergitter, Dachreling, Schiebedachrahmen, Motorabdeckungen, Zylinderkopfhauben, Ansaugrohre, Scheibenwischer sowie Karosserieaußenteile möglich.

Für den Küchen- und Haushaltsbereich ist der Einsatz fließverbesserter Polyamide zur Herstellung von Komponenten für Küchengeräte, wie z. B. Fritteusen, Bügeleisen, Knöpfe, sowie Anwendungen im Garten-Freizeitbereich, z. B. Komponenten für Bewässerungssysteme oder Gartengeräte und Türgriffe, möglich.

Die folgenden Beispiele dienen der Verdeutlichung der Erfindung, ohne sie in irgendeiner Weise zu beschränken.

BEISPIELE

Die Angaben des zahlenmittleren Molekulargewichts $M_n$ und des gewichtsmittleren Molekulargewichts $M_w$ im Rahmen dieser Erfindung beziehen sich auf eine Bestimmung mittels Gelpermeationschromatographie (GPC). Zur Kalibrierung wurde PMMA als Polymerstandard mit einer niedrigen Polydispersität eingesetzt.

Druckangaben in barg (gauge pressure, Messdruck) geben den Druck über dem atmosphärischen Druck (von etwa 1 bar) an, d. h. der absolute Druck in bara ist etwa 1 bar höher als der Druck in barg.

Die Einsatzstoffe werden bei Raumtemperatur in den Ansatzkessel eingefüllt, der Kessel wird mehrmals mit Stickstoff gespült und dann verschlossen. Die Temperatur im Kessel wird durch Heizung der Kesselwand beheizt, bis eine klare Salzlösung entsteht. Dann wird die Lösung in das Verfahren kontinuierlich eingeleitet.

Beispiel 1:

Herstellung eines teilaromatischen Polyamid-Oligomers durch Oligomerisierung in einem Rohrbündelreaktor ohne Rückvermischung und ohne Stoffaustausch mit der Umgebung, Entspannen des Austrags in einem separaten Entspannungsbehälter und Nachpolymerisation im Entspannungsbehälter.

Zur Oligomerisierung wurde ein 3-teiliger Rohrbündelreaktor mit 13 Rohren von je 0,6 m Länge und 13 mm Innendurchmesser eingesetzt. Der Rohrbündelreaktor wurde über einen Wärmetauscher erhitzt. Die Einsatzstoffe wurden 1,5 Stunden bei 240 °C Innentemperatur und einem Druck von 40 barg oligomerisiert.

Der Austrag aus dem Rohrbündelreaktor wurde in einem Abscheider (2 L Büchi-Behälter) auf 27 barg und 240 °C entspannt und die gebildete wasserhaltige Gasphase abgetrennt. Die Polyamid-Oligomeren verblieben bei diesen Temperatur- und Druckwerten noch ca. 20 Minuten zur Nachpolymerisation im Abscheider und wurden dann zur Analyse ausgetragen.

Einsatzstoffe:

41,188 Gew.-% Terephthalsäure (TPA)
17,652 Gew.-% Isophthalsäure (IPA)
41,16 Gew.-% Hexamethylendiamin (HMD, zugegeben als 70%ige Lösung in Wasser)
7,55 Gew.-% Hexamethylendiamin (stöchiometrischer Überschuss bezogen auf HMD)
30 Gew.-% gesamte Wassermenge
300 ppm Natriumhypophosphit (NHP)

Ergebnisse:

Gel Permeation Chromatography (GPC - PMMA kalibriert)
Molekulargewicht $M_n$ 891 g/mol; Polydispersität (PDI) 1,7
Differential Scanning Calorimetry (DSC)
Schmelztemperatur (zweiter Lauf) $T_{m2}$ 317,4 / 327,6 °C; Glasübergangstemperatur (zweiter Lauf) $T_{g2}$ 130 °C; Kristallisationstemperatur ($T_k$) 284,4 °C; Kristallisationsenergie ($\Delta H_2$ - zweiter Lauf) 49 J/g

Beispiel 2:

Zur Oligomerisierung wurde derselbe Rohrbündelreaktor wie in Beispiel 1 eingesetzt.
Bedingungen: 2 h bei 240 °C (Innentemperatur). Druck 45 barg
Der Austrag aus dem Rohrbündelreaktor wurde in einem Abscheider auf 25 barg und 240 °C entspannt. Die Polyamid-Oligomeren verblieben bei diesen Temperatur- und Druckwerten noch ca. 10 Minuten zur Nachpolymerisation im Abscheider und wurden dann zur Analyse ausgetragen. Im Austragsrohr wurden die Polyamid-Oligomeren schnell auf eine Temperatur von 320 bis 340 °C erhitzt (d. h. jeweils auf eine Temperatur oberhalb der Schmelztemperatur des Polymers) und mit unterschiedlichen Durchsätzen ausgetragen. Die genauen Versuchsbedingungen und Ergebnisse sind in der Tabelle 1 angegeben.

Einsatzstoffe:

39,776 Gew.-% Terephthalsäure (TPA)

19,064 Gew.-% Isophthalsäure (IPA)
41,16 Gew.-% Hexamethylendiamin (HMD, zugegeben als 70%ige Lösung in Wasser)
3,0 Gew.-% Hexamethylendiamin (stöchiometrischer Überschuss bezogen auf HMD)
30 Gew.-% gesamte Wassermenge
300 ppm - Natriumhypophosphit (NHP)

Tabelle 1:

| Versuch Nr. | Durchsatz | Temp. Austrag | GPC | | DSC | | | |
|---|---|---|---|---|---|---|---|---|
| | [kg/h] | [°C] | $M_n$ | PDI | Tm2 | $T_{g2}$ | $T_k$ | $\Delta H_2$ |
| | | | [g/mol] | | [°C] | [°C] | [°C] | [J/g] |
| 76-1 | 6 | 320 | 925 | 2,1 | 313,3 | 128 | 280,5 | 62 |
| 76-2 | 4 | 320 | 1.070 | 4,2 | 312,7 | 128 | 278,7 | 57 |
| 76-3 | 0,6 | 320 | 1.890 | 3,1 | 313,0 | 125 | 280,5 | 64 |
| 76-4 | 1,26 | 320 | 1.250 | 2,6 | 310,6 | 125 | 279,3 | 68 |
| 76-5 | 0,49 | 340 | 4.140 | 3,3 | 313,1 | 129 | 279,0 | 64 |
| GPC: Gel Permeation Chromatography (PMMA kalibriert) $M_n$: Molekulargewicht $M_n$ PDI: Polydispersität (PDI) DSC: Differential Scanning Calorimetry $T_{m2}$: Schmelztemperatur (zweiter Lauf) $T_{g2}$: Glasübergangstemperatur (zweiter Lauf) $T_k$: Kristallisationstemperatur $\Delta H_2$: Kristallisationsenergie (zweiter Lauf) | | | | | | | | |

Beispiele 3 bis 8:

Herstellung teilaromatischer Polyamid-Oligomere durch Oligomerisierung in einem Rohrbündelreaktor ohne Stoffaustausch mit der Umgebung und anschließendes Entspannen des Austrags durch Versprühen.

Zur Oligomerisierung wurde wiederum ein 3-teiliger Rohrbündelreaktor mit 13 Rohren von je 0,6 m Länge und 13 mm Innendurchmesser eingesetzt. Die genauen Reaktionsbedingungen sind im Folgenden angegeben. Der Austrag aus dem Rohrreaktor wurde versprüht und das erhaltene Polyamid-Oligomer analysiert.

Beispiel 3:

Die Einsatzstoffe wurden 1,5 Stunden bei 240 °C Innentemperatur und einem Druck von 45 barg oligomerisiert.

Einsatzstoffe:

39,776 Gew.-% Terephthalsäure (TPA)
19,064 Gew.-% Isophthalsäure (IPA)
41,16 Gew.-% Hexamethylendiamin (HMD, zugegeben als 70%ige Lösung in Wasser)
3,0 Gew.-% Hexamethylendiamin (stöchiometrischer Überschuss bezogen auf HMD)
30 Gew.-% Gesamt-Wasser
300 ppm Natriumhypophosphit (NHP)

Ergebnisse:

Gel Permeation Chromatography (GPC - PMMA kalibriert)
Molekulargewicht $M_n$ 762 g/mol; Polydispersität (PDI) 1,7

Beispiel 4:

Einsatzstoffe:

39,776 Gew.-% Terephthalsäure (TPA)
19,064 Gew.-% Isophthalsäure (IPA)
41,16 Gew.-% Hexamethylendiamin (HMD, zugegeben als 70%ige Lösung in Wasser)
3,0 Gew.-% Hexamethylendiamin (stöchiometrischer Überschuss bezogen auf HMD)
30 Gew.-% Gesamt-Wasser
300 ppm Natriumhypophosphit (NHP)
Bedingungen: 2 h bei 240 °C (Produkttemperatur). Druck 40 barg

Ergebnisse:

Gel Permeation Chromatography (GPC - PMMA kalibriert)
Molekulargewicht $M_n$ 930 g/mol; Polydispersität (PDI) 1,7

Beispiel 5:

Ansatzstoffe:

39,776 Gew.-% Terephthalsäure (TPA)
19,064 Gew.-% Isophthalsäure (IPA)
41,16 Gew.-% Hexamethylendiamin (HMD, zugegeben als 70%ige Lösung in Wasser)
3,0 Gew.-% Hexamethylendiamin (stöchiometrischer Überschuss bezogen auf HMD)
30 Gew.-% Gesamt-Wasser
300 ppm Natriumhypophosphit (NHP)
Bedingungen: 1,5 h bei 240 °C (Produkttemperatur). Druck 40 barg

Ergebnisse:

Gel Permeation Chromatography (GPC - PMMA kalibriert)
Molekulargewicht $M_n$ 815 g/mol; Polydispersität (PDI) 1,6

Beispiel 6:

Einsatzstoffe:

41,188 Gew.-% Terephthalsäure (TPA)
17,652 Gew.-% Isophthalsäure (IPA)
41,16 Gew.-% Hexamethylendiamin (HMD, zugegeben als 70%ige Lösung in Wasser)
7,5 Gew.-% Hexamethylendiamin (stöchiometrischer Überschuss bezogen auf HMD)
30 Gew.-% Gesamt-Wasser
300 ppm Natriumhypophosphit (NHP)
Bedingungen: 1,5 h bei 230 bis 240 °C (Produkttemperatur). Druck 35 barg

Ergebnisse:

Gel Permeation Chromatography (GPC - PMMA kalibriert)
Molekulargewicht $M_n$ 836 g/mol; Polydispersität (PDI) 1,6

Beispiel 7:

Einsatzstoffe:

41,188 Gew.-% Terephthalsäure (TPA)
17,652 Gew.-% Isophthalsäure (IPA)
41,16 Gew.-% Hexamethylendiamin (HMD, zugegeben als 70%ige Lösung in Wasser)

3,0 Gew.-% Hexamethylendiamin (stöchiometrischer Überschuss bezogen auf HMD)

1,0 Gew.-% Benzoesäure (bezogen auf Salz-Menge)

30 Gew.-% Gesamt-Wasser

300 ppm Natriumhypophosphit (NHP)

Bedingungen: 1,5 h bei 230 bis 240 °C (Produkttemperatur). Druck 35 barg

Ergebnisse:

Gel Permeation Chromatography (GPC - PMMA kalibriert)

Molekulargewicht $M_n$ 818 g/mol; Polydispersität (PDI) 1,6

Beispiel 8:

Einsatzstoffe:

41,188 Gew.-% Terephthalsäure (TPA)

17,652 Gew.-% Isophthalsäure (IPA)

41,16 Gew.-% Hexamethylendiamin (HMD, zugegeben als 70%ige Lösung in Wasser)

7,5 Gew.-% Hexamethylendiamin (stöchiometrischer Überschuss bezogen auf HMD)

30 Gew.-% Gesamt-Wasser

300 ppm - Natriumhypophosphit (NHP)

Bedingungen: 0,9 h bei 230 bis 240 °C (Produkttemperatur). Druck 40 barg

Ergebnisse:

Gel Permeation Chromatography (GPC - PMMA kalibriert)

Molekulargewicht $M_n$ 734 g/mol; Polydispersität (PDI) 1,4

**Patentansprüche**

1.    Verfahren zur kontinuierlichen Herstellung aliphatischer oder teilaromatischer Polyamid-Oligomere, bei dem man

  a) eine wässrige Zusammensetzung bereitstellt, die wenigstens eine zur Polyamidbildung geeignete Komponente enthält, die ausgewählt ist unter Dicarbonsäuren, Diaminen, Salzen aus wenigstens einer Dicarbonsäure und wenigstens einem Diamin, Lactamen, ω-Aminosäuren, Aminocarbonsäurenitrilen und Mischungen davon, und die bereitgestellte Zusammensetzung einer Oligomerisierungszone zuführt,

  b) die in Schritt a) zugeführte Zusammensetzung einer Oligomerisierung in der Oligomerisierungszone ohne Stoffaustausch mit der Umgebung bei einer Temperatur von 170 bis 290 °C und einem absoluten Druck von wenigstens 20 bar unterzieht, und

  c) aus der Oligomerisierungszone einen die Polyamid-Oligomeren enthaltenden Austrag entnimmt.

2.    Verfahren nach einem der vorhergehenden Ansprüche, wobei das Polyamid-Oligomer ausgewählt ist unter PA 6.T, PA 9.T, PA8.T, PA 10.T, PA 12.T, PA 6.I, PA 8.I, PA 9.I, PA 10.I, PA 12.I, PA 6.T/6, PA 6.T/10, PA 6.T/12, PA 6.T/6.I, PA6.T/8.T, PA 6.T/9.T, PA 6.T/10T, PA 6.T/12.T, PA 12.T/6.T, PA 6.T/6.I/6, PA 6.T/6.I/12, PA 6.T/6.I/6.10, PA 6.T/6.1/6.12, PA 6.T/6.6, PA 6.T/6.10, PA 6.T/6.12, PA 10.T/6, PA 10.T/11, PA 10.T/12, PA 8.T/6.T, PA 8.T/66, PA 8.T/8.I, PA 8.T/8.6, PA 8.T/6.I, PA 10.T/6.T, PA 10.T/6.6, PA 10.T/10.I, PA 10T/10.I/6.T, PA 10.T/6.I, PA 4.T/4.I/46, PA 4.T/4.I/6.6, PA 5.T/5.I, PA 5.T/5.I/5.6, PA 5.T/5.I/6.6, PA 6.T/6.I/6.6, PA MXDA.6, PA IPDA.I, PA IPDA.T, PA MACM.I, PA MACM.T, PA PACM.I, PA PACM.T, PA MXDA.I, PA MXDA.T, PA 6.T/IPDA.T, PA 6.T/MACM.T, PA 6.T/PACM.T, PA 6.T/MXDA.T, PA 6.T/6.I/8.T/8.I, PA 6.T/6.I/10.T/10.I, PA 6.T/6.I/IPDA.T/IPDA.I, PA 6.T/6.I/MXDA.T/MXDA.I, PA 6.T/6.I/MACM.T/MACM.I, PA 6.T/6.I/PACM.T/PACM.I, PA 6.T/10.T/IPDA.T, PA 6.T/12.T/IPDA.T, PA 6.T/10.T/PACM.T, PA 6.T/12.T/PACM.T, PA 10.T/IPDA.T, PA 12.T/IPDA.T und Copolymeren und Gemischen davon, oder

wobei das Polyamid-Oligomer ausgewählt ist unter PA 4, PA 5, PA 6, PA 7, PA 8, PA 9, PA 10, PA 11, PA 12, PA 46, PA 66, PA 666, PA 69, PA 610, PA 612, PA 96, PA 99, PA 910, PA 912, PA 1212 und Copolymeren und Gemischen davon.

3.    Verfahren nach einem der Ansprüche 1 oder 2, wobei die zur Oligomerisierung eingesetzte Oligomerisierungszone nicht rückvermischt ist.

**4.** Verfahren nach einem der Ansprüche 1 bis 3, wobei die Oligomerisierung in Schritt b) einphasig in der flüssigen Phase erfolgt.

**5.** Verfahren nach einem der Ansprüche 1 bis 4, wobei man den in Schritt c) entnommenen Austrag aus der Oligomerisierungszone einer Weiterverarbeitung unterzieht, ohne vorher eine flüssige, die Oligomeren enthaltende Phase mit verringertem Wassergehalt zu isolieren (= Schritt d), bei dem man

- den Austrag aus der Oligomerisierungszone ohne eine vorherige Entspannung einer Vorrichtung zur Entfernung von Wasser sowie zur Nachpolymerisation zuführt, die vorzugsweise ausgewählt ist unter Extrudern, Knetern, Strangentgasern oder einer Kombination aus wenigstens zwei dieser Vorrichtungen, oder
- den Austrag aus der Oligomerisierungszone einer vollständigen Entspannung unter Erhalt einer wasserhaltigen Gasphase und einer die Oligomeren enthaltenden festen Phase unterzieht und wenigstens einen Teil der wasserhaltigen Gasphase abtrennt.

**6.** Verfahren nach einem der Ansprüche 1 bis 4, bei dem man den in Schritt c) erhaltenen Austrag aus der Oligomerisierungszone in eine Entspannungszone einspeist und einer Entspannung unter Erhalt einer wasserhaltigen Gasphase und einer die Oligomeren enthaltenden flüssigen Phase unterzieht und wenigstens einen Teil der wasserhaltigen Gasphase abtrennt (= Schritt d).

**7.** Verfahren nach Anspruch 6, bei dem in Schritt d) keine Polyamid-Oligomere enthaltende feste Phase erhalten wird.

**8.** Verfahren nach einem der Ansprüche 6 oder 7, wobei in Schritt d) der Austrag aus der Oligomerisierungszone auf einen absoluten Druck entspannt wird, der um wenigstens 5 bar, bevorzugt um wenigstens 10 bar, insbesondere um wenigstens 15 bar, unterhalb des Drucks in der Oligomerisierungszone liegt.

**9.** Verfahren nach einem der Ansprüche 6 bis 8, bei dem man die die Polyamid-Oligomeren enthaltende Flüssigphase einer Nachpolymerisation in der Entspannungszone unterzieht (= Schritt e).

**10.** Verfahren nach einem der Ansprüche 6 bis 9, wobei der Austrag der die Oligomeren enthaltenden Flüssigphase aus der Entspannungszone über einen temperierbaren Abzug erfolgt.

**11.** Verfahren nach Anspruch 10, wobei der Austrag aus der Entspannungszone auf eine Temperatur oberhalb der Schmelztemperatur der Polyamid-Oligomeren erhitzt wird.

**12.** Verfahren zur Herstellung eines Polyamids, bei dem man ein Polyamid-Oligomer erhältlich durch ein Verfahren, wie in einem der Ansprüche 1 bis 11 definiert, einer weiteren Polymerisation unterzieht.

**13.** Verfahren nach Anspruch 12, bei dem man im Anschluss an den Schritt d) oder im Anschluss an den Schritt e) einen flüssigen Austrag aus der Entspannungszone entnimmt und diesen anschließend einer weiteren Polymerisation in der Festphase oder in der Schmelze unterzieht.

**Claims**

**1.** A process for continuously preparing aliphatic or semiaromatic polyamide oligomers, in which

a) an aqueous composition comprising at least one component which is suitable for polyamide formation and is selected from dicarboxylic acids, diamines, salts of at least one dicarboxylic acid and at least one diamine, lactams, $\omega$-amino acids, aminocarbonitriles and mixtures thereof is provided, and the composition provided is supplied to an oligomerization zone,
b) the composition supplied in step a) is subjected to an oligomerization in the oligomerization zone without mass transfer with the environment at a temperature of 170 to 290°C and an absolute pressure of at least 20 bar, and
c) an output comprising the polyamide oligomers is withdrawn from the oligomerization zone.

2. The process according to any of the preceding claims, wherein the polyamide oligomer is selected from PA 6.T, PA 9.T, PA8.T, PA 10.T, PA 12.T, PA 6.I, PA 8.I, PA 9.I, PA 10.I, PA 12.I, PA 6.T/6, PA 6.T/10, PA 6.T/12, PA 6.T/6.I, PA6.T/8.T, PA 6.T/9.T, PA 6.T/10T, PA 6.T/12.T, PA 12.T/6.T, PA 6.T/6.I/6, PA 6.T/6.I/12, PA 6.T/6.I/6.10, PA 6.T/6.I/6.12, PA 6.T/6.6, PA 6.T/6.10, PA 6.T/6.12, PA 10.T/6, PA 10.T/11, PA 10.T/12, PA 8.T/6.T, PA 8.T/66, PA 8.T/8.I, PA 8.T/8.6, PA 8.T/6.I, PA 10.T/6.T, PA 10.T/6.6, PA 10.T/10.I, PA 10T/10.I/6.T, PA 10.T/6.I, PA 4.T/4.I/46, PA 4.T/4.I/6.6, PA 5.T/5.I, PA 5.T/5.I/5.6, PA 5.T/5.I/6.6, PA 6.T/6.I/6.6, PA MXDA.6, PA IPDA.I, PA IPDA.T, PA MACM.I, PA MACM.T, PA PACM.I, PA PACM.T, PA MXDA.I, PA MXDA.T, PA 6.T/IPDA.T, PA 6.T/MACM.T, PA 6.T/PACM.T, PA 6.T/MXDA.T, PA 6.T/6.I/8.T/8.I, PA 6.T/6.I/10.T/10.I, PA 6.T/6.I/IPDA.T/IPDA.I, PA 6.T/6.I/MXDA.T/MXDA.I, PA 6.T/6.I/MACM.T/MACM.I, PA 6.T/6.I/PACM.T/PACM.I, PA 6.T/10.T/IPDA.T, PA 6.T/12.T/IPDA.T, PA 6.T/10.T/PACM.T, PA 6.T/12.T/PACM.T, PA 10.T/IPDA.T, PA 12.T/IPDA.T and copolymers and mixtures thereof, or
wherein the polyamide oligomer is selected from PA 4, PA 5, PA 6, PA 7, PA 8, PA 9, PA 10, PA 11, PA 12, PA 46, PA 66, PA 666, PA 69, PA 610, PA 612, PA 96, PA 99, PA 910, PA 912, PA 1212 and copolymers and mixtures thereof.

3. The process according to either of claims 1 and 2, wherein the oligomerization zone used for oligomerization is not backmixed.

4. The process according to any of claims 1 to 3, wherein the oligomerization in step b) is effected monophasically in the liquid phase.

5. The process according to any of claims 1 to 4, wherein the output from the oligomerization zone withdrawn in step c) is subjected to a further processing operation without previously isolating a liquid phase comprising the oligomers and having a reduced water content (= step d), in which

   - the output from the oligomerization zone is sent without prior expansion to an apparatus for removal of water and for postpolymerization, which is preferably selected from extruders, kneaders, extrudate devolatilizers or a combination of at least two of these apparatuses,
   or
   - the output from the oligomerization zone is subjected to full expansion to obtain a water-containing gas phase and a solid phase comprising the oligomers, and at least a portion of the water-containing gas phase is removed.

6. The process according to any of claims 1 to 4, in which the output from the oligomerization zone obtained in step c) is fed into a flash zone and subjected to an expansion to obtain a water-containing gas phase and a liquid phase comprising the oligomers, and at least a portion of the water-containing gas phase is removed (= step d).

7. The process according to claim 6, in which no solid phase comprising polyamide oligomers is obtained in step d).

8. The process according to either of claims 6 and 7, wherein the output from the oligomerization zone is expanded in step d) to an absolute pressure at least 5 bar, preferably at least 10 bar and especially at least 15 bar below the pressure in the oligomerization zone.

9. The process according to any of claims 6 to 8, in which the liquid phase comprising the polyamide oligomers is subjected to a postpolymerization in the flash zone (= step e).

10. The process according to any of claims 6 to 9, wherein the liquid phase comprising the oligomers is discharged from the flash zone via a temperature-controllable draw point.

11. The process according to claim 10, wherein the output from the flash zone is heated to a temperature above the melting temperature of the polyamide oligomers.

12. A process for preparing a polyamide, in which a polyamide oligomer obtainable by a process as defined in any of claims 1 to 11 is subjected to a further polymerization.

13. The process according to claim 12, in which step d) is followed or step e) is followed by withdrawal of a liquid output from the flash zone which is then subjected to a further polymerization in the solid phase or in the melt.

**Revendications**

1. Procédé de fabrication continue d'oligomères de polyamide aliphatiques ou partiellement aromatiques, selon lequel

   a) une composition aqueuse est préparée, qui contient au moins un composant approprié pour la formation d'un polyamide, qui est choisi parmi les acides dicarboxyliques, les diamines, les sels d'au moins un acide dicarboxylique et d'au moins une diamine, les lactames, les acides aminés ω, les nitriles d'acides aminocarboxyliques et leurs mélanges, et la composition préparée est introduite dans une zone d'oligomérisation,
   b) la composition introduite à l'étape a) est soumise à une oligomérisation dans la zone d'oligomérisation sans échange de matière avec l'environnement à une température de 170 à 290 °C et à une pression absolue d'au moins 20 bar, et
   c) une sortie contenant les oligomères de polyamide est extraite de la zone d'oligomérisation.

2. Procédé selon l'une quelconque des revendications précédentes, dans lequel l'oligomère de polyamide est choisi parmi PA 6.T, PA 9.T, PA 8.T, PA 10.T, PA 12.T, PA 6.I, PA 8.I, PA 9.I, PA 10.I, PA 12.I, PA 6.T/6, PA 6.T/10, PA 6.T/12, PA 6.T/6.I, PA 6.T/8.T, PA 6.T/9.T, PA 6.T/10T, PA 6.T/12.T, PA 12.T/6.T, PA 6.T/6.I/6, PA 6.T/6.I/12, PA 6.T/6.I/6.10, PA 6.T/6.I/6.12, PA 6.T/6.6, PA 6.T/6.10, PA 6.T/6.12, PA 10.T/6, PA 10.T/11, PA 10.T/12, PA 8.T/6.T, PA 8.T/66, PA 8.T/8.I, PA 8.T/8.6, PA 8.T/6.I, PA 10.T/6.T, PA 10.T/6.6, PA 10.T/10.I, PA 10T/10.I/6.T, PA 10.T/6.I, PA 4.T/4.I/46, PA 4.T/4.I/6.6, PA 5.T/5.I, PA 5.T/5.I/5.6, PA 5.T/5.I/6.6, PA 6.T/6.I/6.6, PA MXDA.6, PA IPDA.I, PA IPDA.T, PA MACM.I, PA MACM.T, PA PACM.I, PA PACM.T, PA MXDA.I, PA MXDA.T, PA 6.T/IPDA.T, PA 6.T/MACM.T, PA 6.T/PACM.T, PA 6.T/MXDA.T, PA 6.T/6.I/8.T/8.I, PA 6.T/6.I/10.T/10.I, PA 6.T/6.I/IPDA.T/IPDA.I, PA 6.T/6.I/MXDA.T/MXDA.I, PA 6.T/6.I/MACM.T/MACM.I, PA 6.T/6.I/PACM.T/PACM.I, PA 6.T/10.T/IPDA.T, PA 6.T/12.T/IPDA.T, PA 6.T/10.T/PACM.T, PA 6.T/12.T/PACM.T, PA 10.T/IPDA.T, PA 12.T/IPDA.T et leurs copolymères et leurs mélanges,
   ou
   l'oligomère de polyamide est choisi parmi PA 4, PA 5, PA 6, PA 7, PA 8, PA 9, PA 10, PA 11, PA 12, PA 46, PA 66, PA 666, PA 69, PA 610, PA 612, PA 96, PA 99, PA 910, PA 912, PA 1212 et leurs copolymères et leurs mélanges.

3. Procédé selon l'une quelconque des revendications 1 ou 2, dans lequel la zone d'oligomérisation utilisée pour l'oligomérisation n'est pas rétromélangée.

4. Procédé selon l'une quelconque des revendications 1 à 3, dans lequel l'oligomérisation à l'étape b) a lieu sous forme monophasée dans la phase liquide.

5. Procédé selon l'une quelconque des revendications 1 à 4, dans lequel la sortie extraite à l'étape c) de la zone d'oligomérisation est soumise à un traitement supplémentaire, sans isoler au préalable une phase liquide contenant les oligomères ayant une teneur en eau réduite (= étape d), selon lequel

   - la sortie de la zone d'oligomérisation est introduite sans détente préalable dans un dispositif pour l'élimination de l'eau et pour la polymérisation secondaire, qui est de préférence choisi parmi les extrudeuses, les malaxeurs, les dégazeurs en continu ou une combinaison d'au moins deux de ces dispositifs,
   ou
   - la sortie de la zone d'oligomérisation est soumise à une détente totale pour obtenir une phase gazeuse contenant de l'eau et une phase solide contenant les oligomères, et au moins une partie de la phase gazeuse contenant de l'eau est séparée.

6. Procédé selon l'une quelconque des revendications 1 à 4, selon lequel la sortie obtenue à l'étape c) est introduite depuis la zone d'oligomérisation dans une zone de détente et soumise à une détente pour obtenir une phase gazeuse contenant de l'eau et une phase liquide contenant les oligomères, et au moins une partie de la phase gazeuse contenant de l'eau est séparée (= étape d).

7. Procédé selon la revendication 6, selon lequel, à l'étape d), aucune phase solide contenant des oligomères de polyamide n'est obtenue.

8. Procédé selon l'une quelconque des revendications 6 ou 7, dans lequel, à l'étape d), la sortie de la zone d'oligomérisation est détendue à une pression absolue qui est au moins 5 bar, de préférence au moins 10 bar, notamment au moins 15 bar, en dessous de la pression dans la zone d'oligomérisation.

9. Procédé selon l'une quelconque des revendications 6 à 8, selon lequel la phase liquide contenant les oligomères de polyamide est soumise à une polymérisation secondaire dans la zone de détente (= étape e).

10. Procédé selon l'une quelconque des revendications 6 à 9, dans lequel la sortie de la phase liquide contenant les oligomères de la zone de détente a lieu par une conduite de soutirage ajustable en température.

11. Procédé selon la revendication 10, dans lequel la sortie de la zone de détente est portée à une température supérieure à la température de fusion des oligomères de polyamide.

12. Procédé de fabrication d'un polyamide, selon lequel un oligomère de polyamide qui peut être obtenu par un procédé tel que défini dans l'une quelconque des revendications 1 à 11 est soumis à une polymérisation supplémentaire.

13. Procédé selon la revendication 12, selon lequel, après l'étape d) ou après l'étape e), une sortie liquide est extraite de la zone de détente, puis celle-ci est soumise à une polymérisation supplémentaire dans la phase solide ou dans la masse fondue.

## Fig. 1

Oligomerisierung

Ansatz

Oligomere
(Präpolymer)

## Fig. 2

Oligomerisierung

Entspannungsbehälter

Ansatz

Oligomere
(Präpolymer)

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0693515 A1
- DE 4142978
- WO 2004055084 A
- WO 0228941 A
- US 4019866 A
- EP 0123377 A2
- DE 4329676 A1
- EP 0976774 A2
- EP 0490359 A1
- WO 2009040189 A
- EP 1095030 A
- EP 584567 A
- DE 102004049342
- FR 1025
- DE 102004050025 A

**In der Beschreibung aufgeführte Nicht-Patentliteratur**

- **KUNSTSTOFFHANDBUCH.** ¾ Technische Thermoplaste: Polyamide. Carl Hanser Verlag, 1998, 42-71
- **K. MASTERS.** Spray Drying Handbook. Longman, 1991, 23-66
- *CHEMICAL ABSTRACTS,* 56386-64-2